(19) **Europäisches Patentamt**
**European Patent Office**
**Office européen des brevets**

(11) **EP 2 454 838 B1**

(12) **EUROPEAN PATENT SPECIFICATION**

(45) Date of publication and mention
of the grant of the patent:
**06.07.2016 Bulletin 2016/27**

(51) Int Cl.:
*H04L 1/00* (2006.01)  *H04N 19/44* (2014.01)
*H04J 3/00* (2006.01)  *H04B 7/26* (2006.01)

(21) Application number: **09780634.3**

(86) International application number:
**PCT/EP2009/059064**

(22) Date of filing: **15.07.2009**

(87) International publication number:
**WO 2011/006538 (20.01.2011 Gazette 2011/03)**

(54) **An apparatus for multiplexing multimedia broadcast signals and related forward error control data in time sliced burst transmission frames**

Apparat zum Multiplexen von Multimedia-Rundfunksignalen und dazugehöriger Vorwärtsfehlerkorrektur in Übertragungsrahmen mit Zeitschlitzen

Appareil de multiplexage de signaux multimédias de radiodiffusion et des données de correction d'erreurs sans voie de retour dans des trames de transmission scindées en temps

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**23.05.2012 Bulletin 2012/21**

(73) Proprietor: **Nokia Technologies Oy**
**02610 Espoo (FI)**

(72) Inventors:
• **HANNUKSELA, Miska**
**FI-36110 Ruutana (FI)**
• **VADAKITAL, Vinod Kumar Malamal**
**FI-33720 Tampere (FI)**

(74) Representative: **Nokia Corporation**
**Intellectual Property Department**
**Karakaari 7**
**02610 Espoo (FI)**

(56) References cited:
**WO-A1-00/76113      WO-A2-2007/060589**
**US-A1- 2003 200 499    US-A1- 2008 130 602**
**US-B2- 7 454 683**

• **WAI-TIAN TAN ET AL: "Error control for video multicast using hierarchical FEC" IMAGE PROCESSING, 1999. ICIP 99. PROCEEDINGS. 1999 INTERNATIONAL CONFE RENCE ON KOBE, JAPAN 24-28 OCT. 1999, PISCATAWAY, NJ, USA,IEEE, US LNKD-DOI:10.1109/ICIP.1999.821639, vol. 1, 24 October 1999 (1999-10-24), pages 401-405, XP010369145 ISBN: 978-0-7803-5467-8**

## Description

The present invention relates to apparatus for the processing of multicast signals in a time sliced transmission system. The invention further relates to, but is not limited to, apparatus for processing multicast signals in mobile devices.

The European Telecommunication Standards Institute (ETSI) standard for terrestrial digital video broadcast, known as DVB-T, has been established for the general transmission of video data in a digital network. However the DVB-T is inherently unsuitable for portable electronic devices such as mobile phones. This is due to the fact that a DVB-T configured terminal or receiving device requires high power consumption in order to operate, and in many instances this places too much of a power burden on the mobile device.

The high power consumption requirement of DVB-T may be attributed to the multiplexing scheme deployed by the standard. The standard requires the mobile device to have the receiving circuitry continuously powered on during use in order to receive the closely multiplexed elementary streams and services. It is this continual use of the receive circuitry which results in the shortening of the battery life of the mobile device.

In order to address this problem ETSI has developed a further digital video broadcasting standard which is more suited to handheld mobile devices. The standard is called Digital Video Broadcasting-Handheld which is also known as DVB-H. DVB-H extends the battery life of the mobile device by using the concept of time slicing. Such a concept when adopted in DVB-H results in sending a multimedia stream in the form of bursts. Where each burst is sent at a significantly higher bit rate when compared to the bit rate used to transmit the same stream using DVB-T.

DVB-H may be envisaged as dividing an elementary or multimedia stream into a number of individual sections. The sections may then be transmitted by a series of time sliced bursts, where the transmission of each burst may be staggered in time when compared to a previous burst. Between each time sliced burst relating to a multimedia stream other time sliced bursts relating to other multimedia streams may also be transmitted in the otherwise allocated bandwidth. This time sliced burst structure allows the receiver of particular elementary or multimedia streams to stay active for shorter periods of time and yet still receive the data relating to the requested service.

However, adopting a time slicing strategy in order to reduce power consumption has the consequence of increasing the tune in or channel switch delay when compared to a continuous transmission strategy. This delay refers to the time taken from the user initiating the start of receiving an elementary or multimedia stream to the actual time the media content starts to be rendered. In addition, further increases in tune in delay may be caused by the frequency and misalignment of sections of the multimedia stream when compared to the time sliced burst boundaries. Minimizing these delays may require both the proper alignment of sections of the elementary stream with the boundaries of the time sliced burst, and the adopting of strategies in order to minimise the probability a receiver has to wait until the next burst arrives.

Typically in wireless communication systems data may be lost through signal interference or other network errors. In order to minimise the effect of lost data in systems which use time slicing, various error correction and concealment schemes have been used. For example, the DVB-H standard employs forward error control (FEC) methods, which may correct lost application data by the transmission of additional error correction data. The error correction data may be calculated according to a particular error correcting code scheme, and may be transmitted together with the corresponding application data within the same time sliced burst. This allows immediate correction of errors which may have been incurred during the process of transmission.

However, for systems employing time slicing the duration of the transmission error can be either equal or longer than the duration of the time sliced burst. In such cases the FEC data is equally likely to be corrupted as the application data thereby making the recovery of the application data within the burst impossible.

One approach to overcoming this problem is to increase the length of the transmission burst thereby making the combination of the application and FEC data less susceptible to the bursty nature of transmission errors.

However, increasing the burst length has the consequence of increasing the size and period of playback time of the application and FEC data contained within. Which in turn may result in an increase in tune in delay, since it is typical for the application and FEC data contained within a time sliced burst to be received in its entirety before decoding can begin.

Another approach to overcoming this problem may involve sending the FEC data ahead in an earlier burst to that of the corresponding application data, whereby the earlier burst is a burst relating to the transmission of the same elementary or multimedia stream. The corresponding application data in such a system is still transmitted in a burst together with FEC data, however the FEC data in this arrangement corresponds to the application data of a later burst. This has the effect of increasing diversity without the penalty of increased tune in delay in the receiver. However, overall end to end delay may be seen to increase due to the requirement of the transmitter sending the FEC data ahead in a separate burst to that of the application data. This may be undesirable for time sensitive streams such as live broadcasts.

Furthermore, by sending the FEC data ahead of the application data requires greater buffering requirements at the receiver since FEC data will always have to be stored in order that subsequent bursts of corresponding application data can be decoded.

US patent application US2008/0130602 discloses a data transmission method for a multicast broadcast service in a broadband wireless access system. In particular the method disclosed therein includes constructing a wireless broadband frame in which Forward Error Correction (FEC) packets can be sent in different frames to the frames in which the corresponding data packets are sent.

This application proceeds from the consideration that sending data via a time sliced transmission system over a wireless network may result in the corruption of the application data contained within the time sliced burst. This is despite the fact that the forward error correction may be used to protect the burst from transmission errors. The corruption of the data within the time sliced burst may be caused by the duration of the wireless channel errors being longer than the duration of the time sliced burst. Whilst techniques have been developed to mitigate the corruption of time sliced burst data over a wireless channel, they typically introduce further unwanted effects such as increased delays and memory requirements.

Embodiments of the present invention aim to address the above problem. There is provided according to a first aspect of the present invention a method according to claim 1, which comprising partitioning a section of an encoded multimedia signal into at least two segments by determining a decoding start of the second of the at least two segments, wherein the decoding start of the second of the at least two segments proceeds a decoding start of the first of the at least two segments; distributing the error correction code for the first of the at least two segments together with the section of the encoded multimedia signal, wherein the section of the encoded multimedia signal is transmitted together with its distributed error correction code within a time slot of a transmission period; and distributing the error correction code for the second of the at least two segments with a section of at least one further encoded multimedia signal, wherein the section of the at least one further encoded multimedia signal is transmitted together with its distributed error correction code within a further time slot of the transmission period such that the error correction code for the second of the at least two segments is received and decoded at a corresponding receiving device before a specified time.

The specified time may correspond to the time when the decoded multimedia signal associated with the second of the at least two segments of the encoded multimedia signal is scheduled to be played at the receiving device.

The method may further comprise signalling that the error correction code for the second of the at least two segments is transmitted within the further time slot of the transmission frame.

The signalling may comprise adding information to a header which is transmitted in the time slot of the transmission period.

The section of the encoded multimedia signal may comprise a plurality of internet protocol datagrams, and each internet protocol datagram may comprise a plurality of frames of the encoded multimedia signal.

The transmission period may be a time sliced burst transmission frame, the time sliced burst transmission frame may comprise a plurality of time slots, and data transmitted within a time slot of the transmission period may be transmitted as part of a burst within a burst transmission time slot of the time sliced burst transmission frame.

There is provided according to a second aspect of the present invention an apparatus according to claim 7, which is configured to: partition a section of an encoded multimedia signal into at least two segments by determining a decoding start of the second of the at least two segments, wherein the decoding start of the second of the at least two segments proceeds a decoding start of the first of the at least two segments; determining an error correction code for each of the at least two time segments; distributing the error correction code for the first of the at least two segments together with the section of the encoded multimedia signal, wherein the section of the encoded multimedia signal is transmitted together with its distributed error correction code within a time slot of a transmission period; and distributing the error correction code for the second of the at least two segments with a section of at least one further encoded multimedia signal, wherein the section of the at least one further encoded multimedia signal is transmitted together with its distributed error correction code within a further time slot of the transmission period such that the error correction code for the second of the at least two segments is received and decoded at a corresponding receiving device before a specified time.

The specified time may correspond to the time when the decoded multimedia signal associated with the second of the at least two segments of the encoded multimedia signal is scheduled to be played at the receiving device.

The apparatus is preferably further configured to perform: signalling that the error correction code for the second of the at least two segments is transmitted within the further time slot of the transmission frame, and add information to a header which is transmitted in the time slot of the transmission period.

The apparatus is preferably further configured to perform generating the encoded multimedia signal by using a scalable multimedia encoder comprising a plurality of coding layers, and the encoded multimedia signal may comprise a plurality of encoded layers.

The section of the encoded multimedia signal may comprise a plurality of internet protocol datagrams, and each internet protocol datagram may comprise a plurality of frames of the encoded multimedia signal.

The transmission period may be a time sliced burst transmission frame, the time sliced burst transmission frame may comprise a plurality of time slots, and where data transmitted within a time slot of the transmission period may be transmitted as part of a burst within a burst transmission time slot of the time sliced burst transmission frame.

Brief Description of Drawings

For better understanding of the present application, reference will now be made by way of example to the accompanying drawings in which:

Figure 1 shows schematically an electronic device employing some examples of the invention;
Figure 2 shows schematically a time sliced communication system employing some examples of the present invention;
Figure 3 shows schematically a time sliced burst transmitter deploying a first example of the invention;
Figure 4 shows schematically the transmission of a particular multimedia stream by time sliced burst according to some examples of the invention;
Figure 5 shows schematically the mapping of multiple multimedia streams to a time sliced burst frame according to examples of the invention;
Figure 6 shows schematically a partitioning of a frequency band according to some examples of the invention;
Figure 7 shows a flow diagram illustrating the operation of the time sliced burst transmission system according to some examples of the invention;
Figure 8 shows schematically an IP encapsulator according to some embodiments of the invention;
Figure 9 shows a flow diagram illustrating the operation of the IP encapsulator as shown in figure 8 according to some embodiments of the invention;
Figure 10 shows schematically an ADTFEC generator according to some embodiments of the invention;
Figure 11 shows a flow diagram illustrating the operation of the ADTFEC generator as shown in figure 10 according to some embodiments of the invention;
Figure 12 shows schematically an example of the distribution of subFEC over various MPE-FEC frames according to some embodiments of the invention;
Figure 13 shows schematically an example timeline of a multimedia stream according to some embodiments of the invention;
Figure 14 shows schematically a time sliced burst receiver deploying a first example of the invention; and
Figure 15 shows a flow diagram illustrating the operation the time sliced burst receiver as shown in figure 15 according to some examples of the invention;

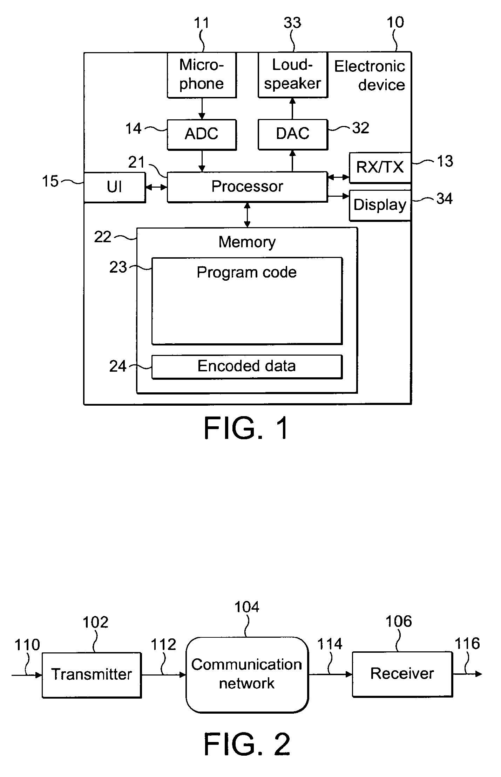

The following describes apparatus and methods for the provision of time sliced burst transmission systems. In this regard reference is first made to Figure 1 schematic block diagram of an exemplary electronic device 10 or apparatus, which may incorporate all or parts of a time sliced burst transmission system according to some examples of the invention.

The electronic device 10 may for example be a mobile terminal or user equipment of a wireless communication system.

The electronic device 10 comprises a microphone 11, which is linked via an analogue-to-digital converter (ADC) 14 to a processor 21. The processor 21 is further linked via a digital-to-analogue converter (DAC) 32 to loudspeakers 33. The processor 21 is further linked to a transceiver (TX/RX) 13, to a user interface (UI) 15 and display 34 and to a memory 22.

The processor 21 may be configured to execute various program codes. The implemented program codes comprise code to implement the function of receiving time sliced burst and perform forward error correction according to some examples. The implemented program codes 23 may further comprise additional code for further processing and decoding the multimedia content conveyed as part of the time sliced bursts. The implemented program codes 23 may be stored for example in the memory 22 for retrieval by the processor 21 whenever needed. The memory 22 could further provide a section 24 for storing data, for example data that has been encoded in accordance with some examples.

The processing of time sliced bursts and forward error correction codes may in some examples be implemented in hardware or firmware.

The user interface 15 enables a user to input commands to the electronic device 10, for example via a keypad, and/or to obtain information from the electronic device 10, for example via a display. The transceiver 13 enables a communication with other electronic devices, for example via a wireless communication network.

It is to be understood again that the structure of the electronic device 10 could be supplemented and varied in many ways.

A user of the electronic device 10 may use the microphone 11 for inputting speech that is to be transmitted to some other electronic device or that is to be stored in the data section 24 of the memory 22. A corresponding application may be activated to this end by the user via the user interface 15. This application, which may be run by the processor 21, may cause the processor 21 to execute the encoding code stored in the memory 22.

The analogue-to-digital converter 14 may convert the input analogue audio signal into a digital audio signal and provide the digital audio signal to the processor 21.

The resulting bit stream may be provided to the transceiver 13 for transmission to another electronic device. Alternatively, the coded data could be stored in the data section 24 of the memory 22, for instance for a later transmission or for a later presentation by the same electronic device 10.

The electronic device 10 could also receive a bit stream with correspondingly processed data from another electronic device via its transceiver 13. In this case, the processor 21 may execute the decoding program code stored in the memory 22. The processor 21 may decode the received data, and provide the decoded data to the digital-to-analogue converter 32. The digital-to-analogue converter 32 may then convert the digital decoded data into analogue audio data and output the analogue audio data via the loudspeakers 33. Further the processor 21 may further decode the received data and provide video data to the display 34. Execution of the decoding program code could be triggered as well by an application that has been called by the user via the user interface 15.

The received processed data could also be stored instead of an immediate presentation via the loudspeakers 33 and display 34 in the data section 24 of the memory 22, for instance for enabling a later presentation or a forwarding to still another electronic device.

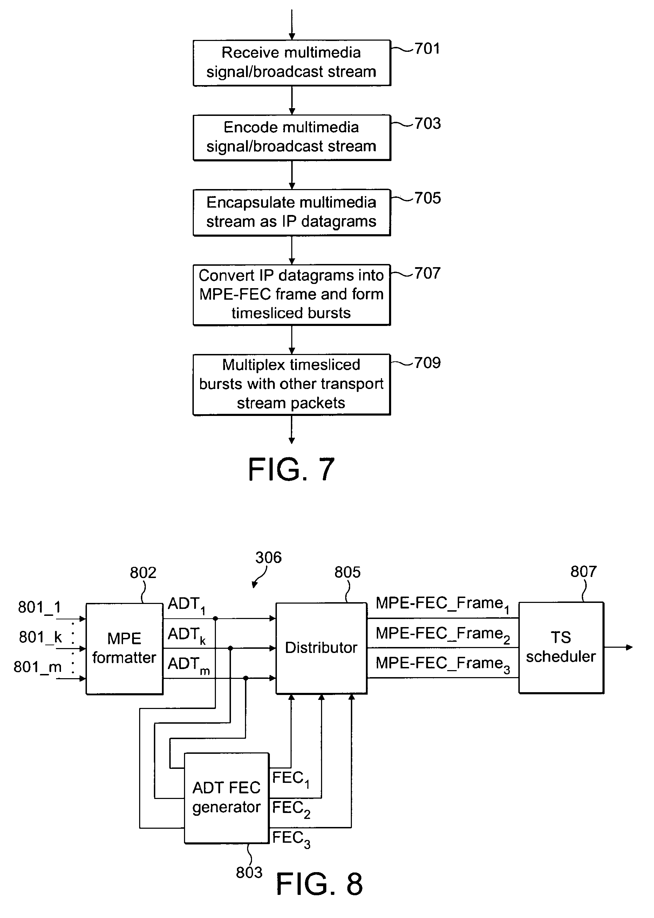

It would be appreciated that the schematic structures described in figures 2, 3, 8, 10 and 14 and the method steps in figures 7, 9, 11 and 15 represent only a part of the operation of a complete system comprising some examples as exemplarily shown implemented in the electronic device shown in figure 1.

The general operation of the time sliced burst transmission system as employed by some embodiments is shown in figure 2. A general time sliced burst transmission system may consist of a transmitter 102, a communications network 104 and receiver 106, as illustrated schematically in figure 2.

The transmitter 102 processes an input of multimedia streams 110 producing a time division multiplexed signal comprising a plurality of time sliced bursts 112. The signal 112 may then be passed to a communication network 104. The link between the transmitter 102 and communication network 104 may be a wireless communications link and in order to effectuate the transmission of the signal 112 it may be modulated by the transmitter 102.

The connection from the communication network 104 and the transmitter 106 may also be a wireless a link and may be used to convey the received signal 114 to the receiver 106.

The signal 114 received at the receiver 106 may have incurred transmission errors and consequently may be different from the signal transmitted from the transmitter 112.

The receiver 106 receives the signal 114. The receiver 106 may further demodulate and filter the incoming signal in order to process the time sliced burst stream identified for the receiver 106. The receiver decompresses the resultant encoded multimedia stream to provide the multimedia stream 116.

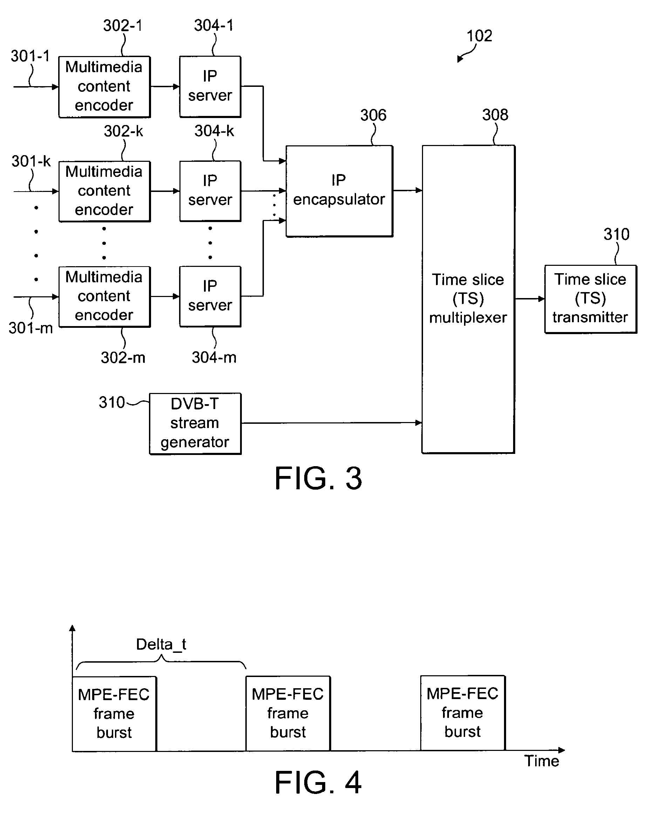

Figure 3 shows schematically a transmitter 102 according to some examples. In summary the transmitter in some examples comprises an apparatus comprising at least one processor and at least one memory including computer program code the at least one memory and the computer program code configured to, with the at least one processor, cause the apparatus at least to perform: dividing a section of an encoded multimedia signal into at least two segments depending on a time based decoding criteria; determining an error correction code for each of the at least two time segments; and associating the error correction code for each of the at least two time segments with the section of the encoded multimedia signal and with a section of at least one further encoded multimedia signal.

The transmitter 102 is depicted as comprising a plurality of input multimedia signals 301_1 to 301_M which may be connected to a plurality of multimedia content encoders 302_1 to 302_M, where the $k^{th}$ input multimedia signal 301_k is associated with the $k^{th}$ multimedia content encoder 302_k. The multimedia content encoder 302_k may be arranged to code an input multimedia signal 301_k into an encoded multimedia stream comprising a number of separate sets of encoded data.

In examples a multimedia content encoder 302_k may be arranged to encode a multimedia signal 301_k associated with a real time broadcast service. The real time broadcast service may consist of a number of different input media streams comprising audio, video and synthetically generated content such as text subtitling and graphics.

In some examples the multimedia content encoder 302_k may comprise a number of individual encoders whereby each encoder may be configured to encode a specific type of media stream. For example, the multimedia content encoder 302_k may at least comprise an audio encoder and a video coder in order to encode media streams consisting of audio and video data.

In further examples the multimedia content encoder 302_k may be arranged to produce a redundant coded media stream in addition to a primary encoded media stream in order to increase the robustness of the source coding to channel errors. In some examples the redundant coding method may comprise additionally encoding the input media stream for a further time. Typically the additional coding of the input media stream may comprise encoding the media content at a lower coding rate.

The output from each of the multimedia content encoders 302_1 to 302_M may each be arranged to be connected to a respective IP server 304_1 to 304_M, such that the output from a $k^{th}$ multimedia content encoder 302_k may be associated with the input for a $k^{th}$ IP server 304_k.

Each IP server may convert its associated input encoded multimedia stream into a corresponding stream of internet protocol packets or IP datagrams.

Each IP server may then be configured to output a IP packetised encoded multimedia stream and pass the IP packetised encoded multimedia stream to the IP encapsulator 306.

It is to be understood that figure 3 may depict conceptually the coding and converting into IP datagrams of broadcast services (or multimedia signals or multimedia streams) 301_1 to 301_M. The broadcast services 301_1 to 301_M may be encoded with the multimedia content encoders 302_1 to 302_M and then converted into their respective IP datagram streams (or IP packetised stream) via the IP servers 304_1 to 304_M.

It is to be understood in some examples that an IP datagram may comprise encoded data relating to a number of media types as determined by the output of the multimedia encoders 301_1 to 302_M. For example, in these examples an IP datagram may contain media types commonly found in encoded streams such as audio and video.

It may be appreciated that the number of multimedia signals encoded by the system as depicted in figure 3 may be any reasonable number as determined by the transmission bandwidth capacity of the underlying communication system.

It is to be understood that each of the IP datagram streams generated by the IP servers 304_1 to 304_M may be conveyed to the input of the IP encapsulator 306.

It is to be further appreciated that the multimedia content encoders 302_1 to 302_M and IP servers 304_1 to 304_M may be different software instances of an encoder device and server device respectively.

The IP encapsulator 306 may be configured to accept an IP datagram stream from each of the IP servers 304_1 to 304_M. For each of the received IP datagram streams the IP encapsulator 306 may encapsulate IP datagram packets associated with each IP datagram media stream into Multi Protocol Encapsulation (MPE) sections.

In some embodiments the encapsulation of each IP datagram stream into MPE sections by the IP encapsulator 306 may comprise a further forward error correction (FEC) stage. In such embodiments the IP encapsulator 306 may calculate additional FEC information over each MPE section. The FEC information may then be appended to MPE sections. In some embodiments these sections may be referred to as MPE-FEC sections.

For each elementary stream the IP encapsulator 306 may then fragment the MPE or MPE-FEC sections into constant sized transport stream (TS) packets. This may be performed at the transport layer within the IP encapsulator 306.

In some examples the MPE or MPE-FEC sections may be fragmented into constant TS packets according to the Moving Pictures Expert Group (MPEG) transport stream standard MPEG-2 Part1, Systems.

The transport stream packets of the MPE or MPE-FEC sections for each multimedia stream may be scheduled for transmission by the IP encapsulator 306 as time sliced bursts. This may be done in order to achieve power savings at the receiver. As part of this operation the IP encapsulator 306 may determine the delta_t information which may be added to each MPE or MPE-FEC section's header.

It is to be understood in some examples that delta_t is a parameter which defines a period of time between successive time sliced bursts of the same multimedia signal or stream (or programme service).

Figure 4 illustrates the transmission of a particular multimedia signal or stream by time sliced bursts as instigated by the IP encapsulator 306, where it may be appreciated that the period between subsequent bursts of the same multimedia stream may be defined by the time period delta_t.

It may be further appreciated from figure 4 that when a particular service's assigned time arrives, the data corresponding to the multimedia signal or stream for that service is transmitted as a burst, and any receivers interested in that service may activate their receive circuitry in order to capture the data. After the burst there may be a delay of delta_t before the next burst is sent and accordingly the receivers interested in this service may deactivate their receive circuitry until that time.

In some examples the time period delta_t may be of the order of several seconds.

It is to be understood in some examples that since the delta_t period may be included in the header of each MPE or MPE-FEC section then the interval between consecutive time slices (or bursts) of the multimedia signal or stream may vary.

It is to be appreciated that when there is a real time transmission of a multimedia signal or stream each burst may be viewed as containing a period or delta_t's worth of multimedia data. Thus the system may be configured such that when the next burst of the multimedia signal or stream is received, the receiving terminal may be in a position to decode the burst in order to maintain a continuous time line for the decoded multimedia data.

Further, it is to be understood in some examples that each burst may be transmitted at a data rate which is considerably greater than the data rate of the media content which it carries. For example, in some examples the burst data rate can be in the region of 2Mbits/sec.

As stated above in examples the IP encapsulator 306 may receive a plurality of M IP datagram streams from the IP servers 304_1 to 304_M.

In some examples each of these IP datagram streams may be associated with different programme services where each programme service (or multimedia signal or stream) may be assigned a particular time sliced burst slot.

In some examples the formation of the time sliced bursts may be according to the principles of time division multiplexing, whereby each burst occupies a particular time slot within the time division multiplexed frame.

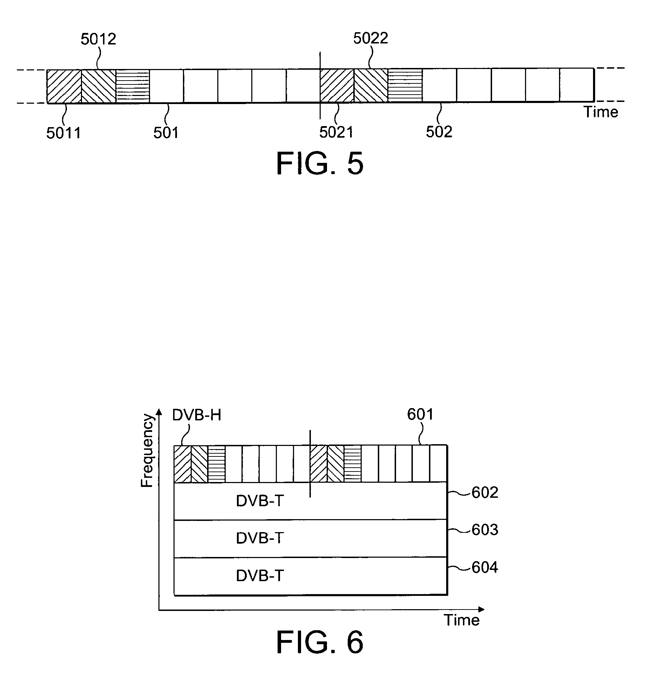

Figure 5 illustrates at a conceptual level how a plurality of IP datagram streams may be mapped by the IP encapsulator 306 to a time sliced burst frame. In this particular example, figure 5 depicts the mapping of two consecutive time sliced burst frames 501 and 502. Each time sliced burst frame may comprise eight time sliced burst slots. In this particular example the IP encapsulator 306 may be capable of receiving up to eight IP datagram streams and assigning a time sliced burst slot to each stream. Therefore in this example each time sliced burst slot may be assigned to a particular multimedia stream (or programme service).

The allocation of time sliced burst slots to a programme service over two consecutive time sliced burst frames may be depicted in figure 5. In figure 5 a first programme service may be allocated the first time slot within each time sliced burst frame, and a second programme service may be allocated the second time slot within each time sliced burst frame and so on. In other words, as can be seen in figure 5, the first programme service is allocated time burst slots 5011 and 5021, and the second programme service is allocated time burst slots 5012 and 5022.

It is to be appreciated for this particular example that the mapping process may be repeated for all eight time slots, where each time slot carries data relating to a different programme service.

Further, it is to be appreciated in this particular example that the time sliced burst frame period is eight time sliced burst slots and that the coded content of any programme service may be transmitted once every eight time sliced burst slots.

Therefore in the above example, a hand held terminal which may be interested in just receiving media content associated with the first programme service may only receive transmitted information for the duration of the first time sliced burst. For other time sliced bursts within the same time sliced burst frame the hand held terminal may power down the receive circuitry in order to conserve power and battery capacity.

In some examples a programme service may be assigned to two or more time sliced burst slots within the time sliced burst frame by the IP encapsulator 306. In such examples a hand held terminal may therefore be required to receive information on multiple slots per burst. In this situation the hand held terminal's received circuitry may have to remain active and powered up for the duration of several time slots, thereby increasing power consumption.

The output from the IP encapsulator 306 may be connected to an input of the transport stream (TS) multiplexer 308. The time sliced multiplexed transport stream may be conveyed to the TS multiplexer 308 via this input.

In some examples the TS multiplexer 308 may be arranged to receive additional multimedia data streams associated with further broadcast services. In some examples these additional data streams may be formed as MPEG2 based transport streams conveying DVB-T broadcast services. These broadcast services may be arranged to transmit continuously in time.

Figure 3 depicts a DVB-T stream as being generated by the DVB-T stream generator 310. The output from the DVB-T stream generator 310 may be depicted as being connected to an input of the TS multiplexer 308.

The TS multiplexer 308 may multiplex the streams according to the principles of frequency division multiplexing (FDM), whereby each transport stream received by the TS multiplexer is assigned a specific frequency sub band within a transmission band.

Figure 6 depicts how a transmission band may be partitioned by the TS multiplexer 308 into a number of smaller sub bands for the transmission of multiple (MPEG2) transport streams. It can be seen from Figure 6 that the transport stream associated with the output from the IP encapsulator 306 may be assigned a single sub band 601, and this sub band is further divided into a number of time slots for the transmission of the time sliced bursts. Further, it may be seen from figure 6 that the other sub bands 602, 603 and 604 may be used to carry the transport streams associated with the further DVB-T services.

The TS multiplexer 308 may multiplex the various transport streams in a single output transport stream having a fixed data rate. If there is insufficient data, null transport stream packets may be generated and included into the output stream by the TS multiplexer 308.

The resulting multiplexed stream from the TS multiplexer may then be transmitted via the TS transmitter 310 to the communications network 104.

Thus in summary in some embodiments there is a method comprising: dividing a section of an encoded multimedia signal into at least two segments depending on a time based decoding criteria; determining an error correction code for each of the at least two time segments; and associating the error correction code for each of the at least two time segments with the section of the encoded multimedia signal and with a section of at least one further encoded multimedia signal.

The operation of these components is described in more detail with reference to the flow chart in figure 7 showing the operation of the time sliced burst transmission system.

The multimedia content signal may be generated by any type of audio (and/or) video source such as a feed from a live performance at a show, a broadcast television show, computer generated video/audio data and stored audio/video data such as those contained on a video tape, compact disk (CD) or digital versatile disk (DVD).

A multimedia signal or stream may be received by the transmitter 102 via a multimedia content encoder 302_k. In a first example the multimedia signal may consist of a multimedia broadcast signal comprising at least audio and video data which are digitally sampled. In other examples of the invention the multi media input may comprise a plurality of analogue signal sources which are analogue to digitally (A/D) converted. In further examples multimedia input may be converted from a pulse code modulation digital signal to an amplitude modulation digital signal.

The receiving of the multimedia signal is shown in figure 7 by processing step 701.

The multimedia signal or stream may received via an input 301_k is first conveyed to an associated multimedia content encoder 302_k.

In some examples a content encoder 302_k may be of a type which is capable of encoding the signal content of a conveyed input multimedia signal 301_k. For example, if the input multimedia signal conveys both audio and video content such as that found in a typical broadcast service. The video content may be encoded by a suitable video codec and the audio content may be encoded by a suitable audio codec. Examples of such codecs include the MPEG4 Advanced Audio Coding (MPEG4-AAC) for audio content and the MPEG4 Advanced Video Coding (AVC) for video content.

In some examples a content encoder 302_k may be configured to generate a redundant further encoded bitstream for the input multimedia signal 301_k. The redundant further encoded bitstream may be encoded differently from the primary stream such that less bandwidth is required to transmit the data. For example, the media content may be encoded using either a different sampling frequency, compression type or compression rate. Alternatively, the redundant further encoded bitstream may be a lower quality variant of the encoded bitstream.

In some examples the redundant further encoded bitstream may be conveyed as part of the encoded bitstream from a content encoder 303_k to the associated IP server 304_k. In further examples the redundant encoded bitstream may be conveyed to the associated IP server 304_k as a separate bitstream to that of the primary encoded stream.

It is to be appreciated in some examples that the input signal 301 may comprise a plurality of broadcast streams or multimedia streams 301_1 to 301_M and that each stream may be associated with a particular programme or broadcast service.

The process of encoding of the multimedia signal or stream is depicted in figure 7 by processing step 703.

An IP server 304_k may receive as input the encoded multimedia signal or stream as generated by an associated multimedia content encoder 302_k. The IP server 304_k may then prepare the encoded multimedia signal stream for further transmission. The encoded multimedia signal or stream may be transmitted to the IP encapsulator 306 either as a self contained bitstream format, a packet stream format, or alternatively it may be encapsulated into a container file.

In some examples the associated IP server 304_k may encapsulate the encoded multimedia signal stream using a communication protocol stack. The communication protocol stack may utilise the Real Time Transport Protocol (RTP), the User Datagram Protocol (UDP) and the Internet Protocol (IP).

In such examples an associated IP server 304_k may use a number of different RTP payload formats in order to facilitate IP datagram encapsulation for each encoded multimedia stream. For instance, each encoded multimedia stream or signal may be encapsulated using RTP payload formats appropriate for encoded audio and video types.

In some examples the process of encapsulating an encoded multimedia signal or stream in the form of IP datagrams may be performed for each one of the M encoded media stream signal streams.

The process encapsulating the M encoded multimedia signal streams as M IP datagram streams is shown in figure 7 as processing step 705.

The M IP datagram stream outputs from the M IP servers may be passed to M inputs of the IP encapsulator 306.

For each of the M IP datagram streams the IP encapsulator 306 may perform a process which facilitates the transport of IP datagrams over transport streams. In order to achieve this, the IP encapsulator 306 may form each IP datagram stream into contiguous sets of multi protocol encapsulation (MPE) sections, where each MPE section may be formed by grouping together a set of sequentially ordered IP based packets.

Figure 8 shows according to some examples a block diagram depicting in further detail the IP encapsulator 306.

The M IP datagram streams from the M IP servers may be shown as being connected to the M inputs 801_1 to 801_M of the IP encapsulator 306.

The M inputs 801_1 to 801_M to the IP encapsulator 306 may be connected to the MPE formatter 802.

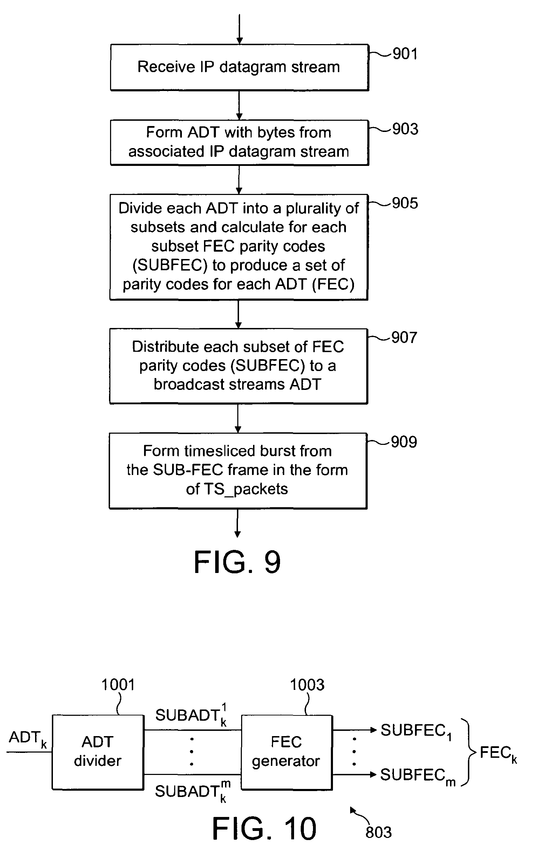

To further assist the understanding of the application the process of encapsulating a IP datagram stream by the IP encapsulator 306 as depicted in figure 8 is described in more detail with reference to the flow chart in figure 9.

The step of receiving the a IP datagram stream relating to a particular multimedia stream or signal from the processing step 705 from figure 7, is depicted as processing step 901 in figure 9.

In some examples each IP datagram stream may be optionally protected by forward error control (FEC) codes when being encapsulated into Multi Protocol Encapsulation (MPE) sections.

In a first example an MPE section associated with a particular input IP datagram stream may be arranged as a two dimensional matrix $M_{ADT}$. This matrix may be referred to as the application data table (ADT) and may be populated by filling its cells with information bytes drawn from the associated IP datagram stream.

In some examples each cell in the application data table may accommodate an information byte and the matrix may be filled in column major order by information bytes drawn from the IP datagram stream. In order to prevent the fragmentation of IP datagrams across multiple MPE sections any unfilled cells of the ADT may be filled by padding with zeroes.

In some examples padding with zeros may also be used when the ADT matrix has not been completely filled with bytes drawn from the IP datagram stream. In such cases padding may be adopted in order to maintain the order and size of the ADT matrix structure.

For example, in a first example a typical application data table (ADT) may be arranged as a two dimensional matrix $M_{ADT}$ whose row dimension $r$ may be drawn from the set $r \in \{256, 512, 768, 1024\}$ and its column dimension $k$ may be taken from the range $0 < k < 191$.

In such a first example the matrix $M_{ADT}$ may only be partially filled with information bytes drawn from the IP datagram stream for a particular combination of row $r$ and column $k$. In this instance it may be necessary to populate the rest of the cells of the ADT with zeroes in order to maintain the size of the ADT matrix structure.

It is to be understood in some examples that the process of populating an ADT with bytes from the IP datagram stream is the process by which an MPE section is formed for a particular multimedia signal or stream.

It is to be further understood in some examples that each ADT associated with a particular multimedia stream or signal may comprise IP datagram data relating to a number of consecutive frames of encoded multimedia data. For example, an ADT may comprise data relating to a number of consecutive frames of encoded audio or video data.

The step of populating the ADT with bytes from an associated IP datagram stream and thereby forming an MPE section relating to a particular multimedia signal or stream may be depicted as processing step 903 in figure 9.

within each time sliced burst frame and so on. In other words, as can be seen in figure 5, the first programme service is allocated time burst slots 5011 and 5021, and the second programme service is allocated time burst slots 5012 and 5022.

It is to be appreciated for this particular example that the mapping process may be repeated for all eight time slots, where each time slot carries data relating to a different programme service.

Further, it is to be appreciated in this particular example that the time sliced burst frame period is eight time sliced burst slots and that the coded content of any programme service may be transmitted once every eight time sliced burst slots.

Therefore in the above example, a hand held terminal which may be interested in just receiving media content associated with the first programme service may only receive transmitted information for the duration of the first time sliced burst. For other time sliced bursts within the same time sliced burst frame the hand held terminal may power down the receive circuitry in order to conserve power and battery capacity.

In some embodiments a programme service may be assigned to two or more time sliced burst slots within the time sliced burst frame by the IP encapsulator 306. In such embodiments a hand held terminal may therefore be required to receive information on multiple slots per burst. In this situation the hand held terminal's received circuitry may have to remain active and powered up for the duration of several time slots, thereby increasing power consumption.

The output from the IP encapsulator 306 may be connected to an input of the transport stream (TS) multiplexer 308. The time sliced multiplexed transport stream may be conveyed to the TS multiplexer 308 via this input.

In some embodiments the TS multiplexer 308 may be arranged to receive additional multimedia data streams associated with further broadcast services. In some embodiments these additional data streams may be formed as MPEG2 based transport streams conveying DVB-T broadcast services. These broadcast services may be arranged to transmit continuously in time.

Figure 3 depicts a DVB-T stream as being generated by the DVB-T stream generator 310. The output from the DVB-T stream generator 310 may be depicted as being connected to an input of the TS multiplexer 308.

The TS multiplexer 308 may multiplex the streams according to the principles of frequency division multiplexing (FDM), whereby each transport stream received by the TS multiplexer is assigned a specific frequency sub band within a transmission band.

Figure 6 depicts how a transmission band may be partitioned by the TS multiplexer 308 into a number of smaller sub bands for the transmission of multiple (MPEG2) transport streams. It can be seen from Figure 6 that the transport stream associated with the output from the IP encapsulator 306 may be assigned a single sub band 601, and this sub band is further divided into a number of time slots for the transmission of the time sliced bursts. Further, it may be seen from figure 6 that the other sub bands 602, 603 and 604 may be used to carry the transport streams associated with the further DVB-T services.

The TS multiplexer 308 may multiplex the various transport streams in a single output transport stream having a fixed data rate. If there is insufficient data, null transport stream packets may be generated and included into the output stream by the TS multiplexer 308.

The resulting multiplexed stream from the TS multiplexer may then be transmitted via the TS transmitter 310 to the communications network 104.

Thus in summary in some embodiments there is a method comprising: dividing a section of an encoded multimedia signal into at least two segments depending on a time based decoding criteria; determining an error correction code for each of the at least two time segments; and associating the error correction code for each of the at least two time segments with the section of the encoded multimedia signal and with a section of at least one further encoded multimedia signal.

The operation of these components is described in more detail with reference to the flow chart in figure 7 showing the operation of the time sliced burst transmission system.

The multimedia content signal may be generated by any type of audio (and/or) video source such as a feed from a live performance at a show, a broadcast television show, computer generated video/audio data and stored audio/video data such as those contained on a video tape, compact disk (CD) or digital versatile disk (DVD).

A multimedia signal or stream may be received by the transmitter 102 via a multimedia content encoder 302_k. In a first embodiment the multimedia signal may consist of a multimedia broadcast signal comprising at least audio and video data which are digitally sampled. In other embodiments of the invention the multi media input may comprise a plurality of analogue signal sources which are analogue to digitally (A/D) converted. In further embodiments multimedia input may be converted from a pulse code modulation digital signal to an amplitude modulation digital signal.

The receiving of the multimedia signal is shown in figure 7 by processing step 701.

The multimedia signal or stream may received via an input 301_k is first conveyed to an associated multimedia content encoder 302_k.

In some embodiments a content encoder 302_k may be of a type which is capable of encoding the signal content of a conveyed input multimedia signal 301_k. For example, if the input multimedia signal conveys both audio and video content such as that found in a typical broadcast service. The video content may be encoded by a suitable video codec and the audio content may be encoded by a suitable audio codec. Examples of such codecs include the MPEG4 Advanced Audio Coding (MPEG4-AAC) for audio content and the MPEG4 Advanced Video Coding (AVC) for video content.

In some embodiments a content encoder 302_k may be configured to generate a redundant further encoded bitstream for the input multimedia signal 301_k. The redundant further encoded bitstream may be encoded differently from the primary stream such that less bandwidth is required to transmit the data. For example, the media content may be encoded using either a different sampling frequency, compression type or compression rate. Alternatively, the redundant further encoded bitstream may be a lower quality variant of the encoded bitstream.

In some embodiments the redundant further encoded bitstream may be conveyed as part of the encoded bitstream from a content encoder 303_k to the associated IP server 304_k. In further embodiments the redundant encoded bitstream may be conveyed to the associated IP server 304_k as a separate bitstream to that of the primary encoded stream.

It is to be appreciated in some embodiments that the input signal 301 may comprise a plurality of broadcast streams or multimedia streams 301_1 to 301_M and that each stream may be associated with a particular programme or broadcast service.

The process of encoding of the multimedia signal or stream is depicted in figure 7 by processing step 703.

An IP server 304_k may receive as input the encoded multimedia signal or stream as generated by an associated multimedia content encoder 302_k. The IP server 304_k may then prepare the encoded multimedia signal stream for further transmission. The encoded multimedia signal or stream may be transmitted to the IP encapsulator 306 either as a self contained bitstream format, a packet stream format, or alternatively it may be encapsulated into a container file.

In some embodiments the associated IP server 304_k may encapsulate the encoded multimedia signal stream using a communication protocol stack. The communication protocol stack may utilise the Real Time Transport Protocol (RTP), the User Datagram Protocol (UDP) and the Internet Protocol (IP).

In such embodiments an associated IP server 304_k may use a number of different RTP payload formats in order to facilitate IP datagram encapsulation for each encoded multimedia stream. For instance, each encoded multimedia stream or signal may be encapsulated using RTP payload formats appropriate for encoded audio and video types.

In some embodiments the process of encapsulating an encoded multimedia signal or stream in the form of IP datagrams may be performed for each one of the M encoded media stream signal streams.

The process encapsulating the M encoded multimedia signal streams as M IP datagram streams is shown in figure 7 as processing step 705.

The M IP datagram stream outputs from the M IP servers may be passed to M inputs of the IP encapsulator 306.

For each of the M IP datagram streams the IP encapsulator 306 may perform a process which facilitates the transport of IP datagrams over transport streams. In order to achieve this, the IP encapsulator 306 may form each IP datagram stream into contiguous sets of multi protocol encapsulation (MPE) sections, where each MPE section may be formed by grouping together a set of sequentially ordered IP based packets.

Figure 8 shows according to some embodiments a block diagram depicting in further detail the IP encapsulator 306.

The M IP datagram streams from the M IP servers may be shown as being connected to the M inputs 801_1 to 801_M of the IP encapsulator 306.

The M inputs 801_1 to 801_M to the IP encapsulator 306 may be connected to the MPE formatter 802.

To further assist the understanding of the application the process of encapsulating a IP datagram stream by the IP encapsulator 306 as depicted in figure 8 is described in more detail with reference to the flow chart in figure 9.

The step of receiving the a IP datagram stream relating to a particular multimedia stream or signal from the processing step 705 from figure 7, is depicted as processing step 901 in figure 9.

In some embodiments each IP datagram stream may be optionally protected by forward error control (FEC) codes when being encapsulated into Multi Protocol Encapsulation (MPE) sections.

In a first embodiment an MPE section associated with a particular input IP datagram stream may be arranged as a two dimensional matrix $M_{ADT}$. This matrix may be referred to as the application data table (ADT) and may be populated by filling its cells with information bytes drawn from the associated IP datagram stream.

In some embodiments each cell in the application data table may accommodate an information byte and the matrix may be filled in column major order by information bytes drawn from the IP datagram stream. In order to prevent the fragmentation of IP datagrams across multiple MPE sections any unfilled cells of the ADT may be filled by padding with zeroes.

In some embodiments padding with zeros may also be used when the ADT matrix has not been completely filled with bytes drawn from the IP datagram stream. In such cases padding may be adopted in order to maintain the order and size of the ADT matrix structure.

For example, in a first embodiment a typical application data table (ADT) may be arranged as a two dimensional matrix $M_{ADT}$ whose row dimension $r$ may be drawn from the set $r \in \{256,512,768,1024\}$ and its column dimension $k$ may be taken from the range $0 < k < 191$.

In such a first embodiment the matrix $M_{ADT}$ may only be partially filled with information bytes drawn from the IP datagram stream for a particular combination of row $r$ and column $k$. In this instance it may be necessary to populate the rest of the cells of the ADT with zeroes in order to maintain the size of the ADT matrix structure.

It is to be understood in some embodiments that the process of populating an ADT with bytes from the IP datagram stream is the process by which an MPE section is formed for a particular multimedia signal or stream.

It is to be further understood in some embodiments that each ADT associated with a particular multimedia stream or signal may comprise IP datagram data relating to a number of consecutive frames of encoded multimedia data. For example, an ADT may comprise data relating to a number of consecutive frames of encoded audio or video data.

The step of populating the ADT with bytes from an associated IP datagram stream and thereby forming an MPE section relating to a particular multimedia signal or stream may be depicted as processing step 903 in figure 9.

The processing step 903 of populating an ADT with bytes from an associated IP datagram stream may be performed for all IP datagram streams connected to the inputs 801_1 to 801_M of the MPE formatter 802.

The application data table (ADT) relating to each multimedia signal or stream may be depicted as $M_{ADTk}$ in figure 8, where the symbol $k$ denotes the number of the multimedia stream or service and therefore may take a value between 1 and N.

In some embodiments the ADT relating to a particular IP datagram stream as generated by processing step 903 in the MPE formatter 802 may be passed to the application data table forward error correction (ADTFEC) generator 803 for further processing. The passing of the ADT relating to a particular IP datagram stream from the MPE formatter to the ADTFEC generator 804 may be performed for all ADTs $ADT_1$ to $ADT_M$.

In some embodiments the further processing as stated above may involve the processing steps of partitioning each ADT into a number of sub partitions, and then calculating forward error control (FEC) information over each partition.

Figure 10 shows a block diagram depicting the structure of the ADTFEC generator 803. The ADTFEC generator 803 is shown as comprising an ADT divider 1001 which may be connected to FEC generator 1003.

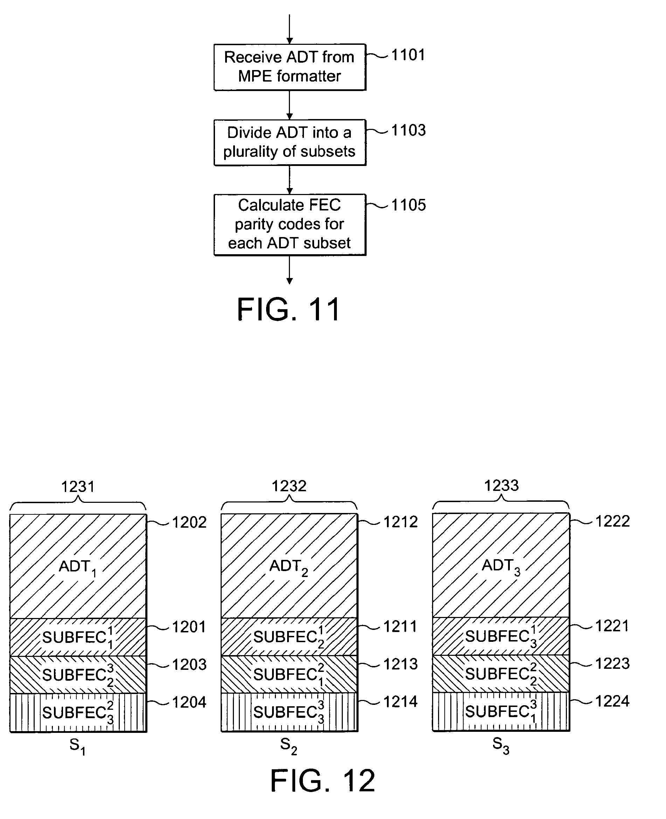

To further assist the understanding of the application the process of dividing and generating FEC codes for each ADT by the ADTFEC generator 803 is described in more detail with reference to the flow chart in Figure 11. In order to simplify the figures and related description the ensuing process may be described from the viewpoint of a single multimedia stream 301_k and its associated application data table $ADT_k$ as generated by processing step 903.

However it is to be understood in some embodiments that the process as depicted by figure 10 together with its corresponding flow chart as depicted by figure 11 may be performed for each ADT generated by the MPE formatter 802.

The step of receiving $ADT_k$ from the Multi Protocol Encapsulation (MPE) formatter 802 may be shown as processing step 1101 in Figure 11.

The ADT divider 1001 may partition each incoming ADT $ADT_k$ into a number of sub sets where each sub set may contain a portion of the ADT. The subsets of the $ADT_k$ may be depicted in figure 10 as the outputs $subADT_k^1$ to $subADT_1^M$ from the ADT divider 1001.

Figure 10 depicts the number of subsets generated by the ADT divider as being equal to the number of multimedia streams M.

It is to be understood in that in some embodiments the number of outputs from the ADT divider 1001 may be equal to or less than the total number of multimedia streams (or services) processed by the IP encapsulator 306.

In some embodiments the process by which the ADT divider 1001 partitions each ADT may depend on the type of encoding algorithms used by each associated content encoder 302_k to encode the associated multimedia stream 301_k,.

For example in various embodiments, a content encoder may be an embedded variable rate source coding scheme, which may also referred as a layered coding scheme. Embedded variable source coding may be used to encode both audio and video signals. The bit stream resulting from the coding operation may be distributed into successive layers. A base or core layer which comprises primary coded data generated by a core encoder may be formed of the binary elements essential for the decoding of the binary stream, and thereby determines a minimum quality of decoding. Subsequent layers may make it possible to progressively improve the quality of the signal arising from the decoding operation, where each new layer may contribute new information. One of the particular features of layered coding is the possibility offered of intervening at any level whatsoever of the transmission or storage chain, so as to delete a part of a binary stream without having to include any particular indication to the decoder.

In some embodiments the application data table (ADT) formed from an embedded variable rate source encoder may be partitioned according to the layers of the encoded signal. For example, the first sub set of a partitioned ADT for a particular stream $\left( subADT_k^1 \right)$ may be assigned to the core encoded layer, and further sub sets of the partitioned ADT ($subADT_k^2$ to $subADT_k^M$) may be assigned to subsequent encoded layers.

Further, in some embodiments the ADT formed from the consecutive frames of multimedia encoded data may be partitioned according to the time line of the multimedia signals. In such embodiments each sub ADT may comprise ADT data relating to a particular frame or a number of frames of the frames of multimedia encoded data contained within the ADT. The distribution of multimedia encoded frames to each sub ADTs may be in time order (or frame number) such that a first sub ADT may comprise one or more frames associated with an earlier time order (or lower frame number) and subsequent sub ADTs may comprise frames which may be associated with a later time order (or higher frame number).

In some embodiments the ADT may be partitioned into sub ADTs according to both the coding layers and frames of the encoded multimedia signal. In such embodiments of the invention a sub ADT may comprise one or more frames of encoded multimedia data where each frame may comprise one or more layers of the encoded signal. For example a sub ADT may comprise the core layer corresponding to the second frame of encoded data contained within the ADT. A further sub ADT may comprise a core layer and a subsequent layer of further encoded frame.

Examples of such embedded variable rate source coding schemes may include the International Telecommunications Union standard (ITU) G.718 Frame error robust narrowband and wideband embedded variable bit-rate coding of speech and audio from 8-32 kbit/s for speech and audio coding, and the ITU-T Recommendation H.264 Advanced video coding, 11/2007, including the scalable extension known as Scalable Video Coding (SVC).

In other embodiments the ADT may be partitioned according to the type of encoded media content. For example, a first sub set of the ADT $\left( subADT_k^1 \right)$ may be assigned to the encoded audio content, and a second or subsequent sub set of the ADT $\left( subADT_k^2 \right)$ may be assigned to the accompanying encoded video content.

The step of dividing an ADT into a plurality of sub sets is shown as processing step 1103 in figure 11.

The ADT subsets belonging to each multimedia stream ( $subADT_k^1$ to $subADT_k^M$ ) may each then be conveyed to an input of the FEC generator 1003. The FEC generator 1003 may then determine a set of FEC parity codes for each ADT sub set it receives.

In some embodiments the set of FEC parity codes determined for each ADT sub set may be achieved by calculating a FEC parity code for each range of columns of the ADT sub set in turn. In other embodiments, data in each ADT sub set can be arranged in column major order into a data table, over which a FEC parity code may be calculated. In this embodiment each FEC parity code may be formed as columns of parity bits, where the dimension of each column is equivalent to the number of rows in the formed data table.

In some embodiments the first ADT sub set $subADT_k^1$ associated with the kth multimedia stream may be the whole matrix $M_{ADT}$. In other words the first sub set of the ADT has not been divided by the ADT divider 1101, and therefore constitutes the original encoded ADT matrix for the kth multimedia stream.

It is therefore to be understood in these embodiments the first ADT sub set $subADT_k^1$ associated with the kth multimedia stream may comprise all the layers and all frames of the multimedia encoded signal contained within the $M_{ADT}$.

In embodiments where the first ADT subset $subADT_k^1$ is the un-partitioned two dimensional matrix $M_{ADT}$, the matrix $M_{ADT}$ may have a row dimension $r$ drawn from the set $r \in \{256, 512, 768, 1042\}$ and a column dimension $k$ taken from the range $0 < k < 191$. The parity codes for each row may be calculated with a $(n, k)$ FEC code.

In these embodiments the FEC parity codes for the first sub set of the ADT may comprise $r$ rows of $(n-k)$ parity bytes.

It is to be understood in such embodiments that the second and subsequent sub sets may comprise partitions of the ADT which have been divided according to the different layers of a scalable coding scheme and/or the time line of the multimedia signals.

In some embodiments the FEC parity codes may be calculated for each ADT sub set by using a systematic coding approach. In this approach each row over which the parity codes maybe calculated may remain unaffected by the FEC coding scheme.

The output from the FEC generator 1003 may comprise the FEC parity codes for each ADT sub set.

The FEC parity codes for each ADT sub set ( $subADT_k^1$ to $subADT_k^M$ ) may be represented in figure 10 for the k$^{th}$ multimedia stream as $subFEC_k^1$ to $subFEC_k^M$ .

The step of calculating FEC parity codes for each ADT sub set is depicted as processing step 1105 in figure 11.

It is to be understood in some embodiments that the process as depicted by processing steps 1101 to 1105 may be repeated for all ADTs generated by the Multi Protocol Encapsulation (MPE) formatter 802 ($ADT_1$ to the $ADT_M$). In other words the process of dividing an ADT into a plurality of sub sets and calculating FEC parity codes for each sub set of the ADT may be repeated for all ADT sub sets.

In figure 8 the FEC parity codes relating to each ADT sub set for the k$^{th}$ multimedia or signal stream may be represented collectively by the set of parity codes

$$FEC_k = \left\{ subFEC_k^1, subFEC_k^2 \dots subFEC_k^M \right\}.$$

Figure 8 depicts there being M ADTs generated by the MPE formatter 801 which in turn results in M sets of FEC codes, each set relating to a different multimedia stream. In other words the output from the ADTFEC generator may constitute the plurality of sets of FEC parity codes; that is the sets $FEC_1$ to $FEC_M$.

The step of dividing each ADT into a plurality of sub sets and then generating FEC parity codes for each of the ADT sub sets is depicted as processing step 905 in figure 9.

It is to be understood in the foregoing description that an MPE-FEC frame may relate to the combination of an ADT with either one or more sub sets of FEC parity codes.

In some embodiments the members of each of the sets of FEC parity codes $FEC_1$ to $FEC_M$ may each be mapped and distributed to an ADT thereby forming a MPE-FEC frame. In other words a particular set of FEC parity codes may have its constituent subset FECs distributed amongst a number of the ADTs. For example, the set of parity codes $\left\{ subFEC_k^1, subFEC_k^2 \dots subFEC_k^M \right\}$ relating to the k$^{th}$ multimedia signal may be distributed to the various multimedia signals' ADTs.

The mapping and distributing process may be performed for each sub set FEC within the set of parity codes whereby each subset FEC is mapped and distributed to a different multimedia stream's ADT thereby forming a MPE-FEC frame.

In order to simplify the foregoing description it is to be understood that the use of the term subset FEC may be abbreviated to subFEC, and is used to refer to a generic member of a FEC set.

In some embodiments the mapping of subFEC parity codes to MPE sections may be performed such that the subFEC parity codes associated with the ADT of a particular stream may be evenly distributed across the various multimedia signals' ADTs. For example, each member of the FEC relating to the k$^{th}$ multimedia stream $\left\{ subFEC_k^1, subFEC_k^2 \dots subFEC_k^M \right\}$ may be mapped to one of the ADTs $ADT_1$ to $ADT_M$.

In some embodiments subFECs may be evenly distributed on a one to one basis an individual subFEC from a particular FEC parity code set ($FEC_k$) to an individual ADT, and then ensuring that the next subFEC from the same FEC parity code set is distributed to a different ADT, whereby the different MPE section may be associated with a different multimedia stream.

Further, in some further embodiments the subFECs may also be distributed to a particular a particular ADT in accordance with the frame order of the encoded multimedia data over which the subFECs were calculated.

In yet further embodiments a subFEC may be calculated over a sub ADT which may comprise data relating to a particular frame or a number of frames in time order, and the subFEC may be distributed to a particular ADT such that the subFEC is received before or at the intended decoding time of the data contained the sub ADT.

In these embodiments this process may be performed in turn for all subFECs within the FEC parity code set. In other words for the general case of the k$^{th}$ multimedia stream this process may be repeated for each subFEC $subFEC_k^1$, $subFEC_k^2$ and $subFEC_k^3$ .

It is to be understood in some embodiments that at least one of the subFEC relating to a particular ADT may be mapped and distributed to the same particular ADT. In other words, a sub set FEC parity code drawn from the set of FEC parity codes relating to a first multimedia stream $FEC_1$ may be mapped and distributed to the ADT associated with the first multimedia signal $ADT_1$. For example, the first sub set FEC parity code of the set of FEC parity codes relating to the first stream $subFEC_1^1$ may be mapped and distributed to the ADT associated with the first stream $ADT_1$.

In these embodiments the first sub set FEC parity codes relating to the first stream $subFEC_1^1$ may be calculated over the rows of the entire ADT. In other words the first sub set of FEC parity codes encompasses all the consecutive frames of multimedia encoded data.

Further, in the example of these embodiments the second sub set FEC parity code of the set of FEC parity codes relating to the first stream $subFEC_1^2$ may be mapped and distributed to the MPE section associated with the second multimedia signal ADT $ADT_2$.

It is to be understood in these embodiments that the above second sub set FEC parity code $subFEC_1^2$ may be calculated over a smaller number of frames of encoded data within the ADT. Further the frames over which the sub set FEC parity code is calculated are generally associated with frames later in time than the first frame contained by the ADT. For example, the FEC parity code in this instance may be calculated over a second or subsequent frame of multimedia encoded data.

The mapping and distribution operation may be repeated until all the sub set FEC parity codes of the set of FEC parity codes relating to the first stream have each been mapped individually in an ascending index order basis to the various ADTs relating to different multimedia streams.

It is to be understood in some embodiments that the choice of multimedia encoded data frames within the ADT over which the second and subsequent sub set parity codes are calculated may be determined such that there is no delay in the decoding and playback of the multimedia data at the receiver, when the time sliced burst carrying the ADT is received in error.

In some embodiments this may be achieved by ensuring that second and subsequent sub set parity codes are calculated over encoded multimedia frames which may be decoded later at the receiver such that the real time playback timeline of the decoded data is not compromised. In other words the decoding process at the receiver may operate in a seamless manner in the event when the principal time sliced burst conveying the ADT may be received in error.

In these embodiments the second and subsequent sub set parity codes may be distributed to time sliced burst transmission frames and MPE-FEC frames associated with other multimedia streams. The distribution of sub sets of parity codes to MPE-FEC frames may be performed such that the receiver 106 is able to receive the sub sets of parity codes before the decoding timeline of the multimedia frames of the respective sub ADTs. In other words, the subsequent subFEC may be transmitted ahead of its predicted decoding time such that it may be utilised at the receiver should the encoded frames to which it is associated with is received in error.

Some embodiments may be illustrated by way of an example system comprising three streams $S_1$, $S_2$ and $S_3$, where each one after encoding IP encapsulation may be formed by the MPE formatter 802 into their respective ADTs: $ADT_1$, $ADT_2$ and $ADT_3$. In this particular example of some embodiments the ADT derived from the first stream $ADT_1$ may be divided into three sub sets $subADT_1^1$, $subADT_1^2$ and $subADT_1^3$, and the FEC parity codes may be generated for each one of these three sub ADTs in turn to give the set of FEC parity codes $FEC_1$ comprising the sub set parity codes $subFEC_1^1$, $subFEC_1^2$ and $subFEC_1^3$.

In this example, the subFEC relating to the first sub set of the first stream $subFEC_1^1$, may be mapped and distributed to the ADT associated with the first stream $ADT_1$ to form the MPE-FEC frame $MPE$-$FEC\_frame_1$. The subFEC parity code relating to the second sub set of the first stream $subFEC_1^2$ may be mapped and distributed to the ADT in ascending index order, in other words the MPE-FEC frame associated with the second stream. Finally, the subFEC parity codes relating to the third sub set of the first stream $subFEC_1^3$ may also be mapped and distributed to the ADT next in ascending index order, in other words the MPE-FEC frame associated with the third stream.

It is to be understood that in some embodiments the parity codes contained in the second and third sub-FECs ($subFEC_1^2$ and $subFEC_1^3$) may be calculated over a sub set of the encoded multimedia frames contained within the first stream's ADT ($ADT_1$). It is to be further understood that the encoded multimedia frames over which the sub set FEC parity codes are calculated may be selected such that they are able to be decoded at the receiver within the playback time line of the decoded multimedia stream. In other words the second and third sub set FEC parity codes may be transmitted as part of subsequent time sliced bursts, such that they may be transmitted and received at the receiver before they may be required for decoding operation.

In further embodiments the mapping of each subFEC parity code contained within the set of FEC parity codes associated with a particular multimedia stream may not be in an ascending index order basis.

For example in further embodiments, the first subFEC associated with a first stream $subFEC_1^1$ may not necessarily be mapped and appended to an ADT section from the first stream $ADT_1$. Rather the first subFEC $subFEC_1^1$ may be mapped and distributed to an ADT from any other stream. Similarly, the second subFEC associated with the first stream $subFEC_1^2$ may not necessarily be mapped and distributed to an ADT from the second stream. Instead the second subFEC $subFEC_1^2$ may be mapped and appended to an ADT from a further stream.

It is to be understood in some embodiments that the mapping of subFEC parity codes drawn from a set of FEC parity codes associated with a particular multimedia stream may follow any pattern of distribution provided that the subFEC parity codes are capable of being received at the receiver in order that they can be decoded within the playback timeline of multimedia stream.

In further embodiments the mapping of the sub-FECs may follow any pattern of distribution providing the pattern of mapping is evenly distributed amongst the ADTs from the various multimedia streams.

The mapping and distribution operation described above may be performed for further multimedia streams. For instance the mapping and appending operation for each subFEC member of the set of FEC parity codes associated with the second multimedia stream may also be performed such that the subFECs are evenly distributed amongst the ADTs relating to the various multimedia streams.

Similarly, in some embodiments at least one of the subFECs relating to the ADT of the second multimedia stream $ADT_2$ may be mapped and distributed to the same particular ADT to form the MPE-FEC frame *MPE-FEC_frame$_2$*.

In some embodiments the subFEC relating to the first sub set of the second stream $subFEC_2^1$, may be mapped and distributed to the ADT associated with the second stream $ADT_2$ to form the MPE-FEC frame *MPE-FEC_frame$_2$*. The subFEC parity code relating to the second sub set of the first stream $subFEC_2^2$ may be mapped and distributed to the ADT next in ascending index order, in other words the ADT associated with the second stream $ADT_3$. As before, this mapping and distribution operation may be repeated until all the subFECs associated with the second stream have each been mapped in an ascending index order basis to ADTs from further multimedia streams.

It is to be understood in some embodiments that the ADT divider 1001 may be arranged to divide each ADT into the same number of sub sets to that of the overall number of streams processed by the IP encapsulator 306. In such embodiments the mapping and distribution operation as described above may be applied cyclic in a manner, whereby some of the subFECs associated with some streams may only be partially mapped to the various ADTs in an ascending index order as described above.

In some embodiments subFECs associated with second and subsequent streams may be mapped and distributed to the respective ADTs in index ascending order until a subFEC has been mapped to the ADT associated with the highest index. When the mapping process reaches the highest index order of ADT, the next subFEC in ascending index order may be assigned to the ADT with the lowest index order.

The above processing steps may be further explained for an embodiment by referring to the previously described example system comprising the three multimedia streams $S_1$, $S_2$ and $S_3$.

In this example of a system, the subFEC relating to the first sub set of the second multimedia stream's ADT $subFEC_2^1$ may be mapped and distributed to the MPE section associated with the second multimedia stream $ADT_2$. The subFEC relating to the second sub set of the second multimedia stream's ADT $subFEC_2^2$ may be mapped and distributed to the ADT next in ascending index order, in other words the ADT associated with the third multimedia stream $ADT_3$. Finally, the ADT-FEC parity codes relating to the third sub set of the second multimedia stream's ADT $subFEC_2^3$ may be mapped and distributed to the ADT next in cyclic index order, that is the ADT associated with the first multimedia stream $ADT_1$.

It is to be understood in some embodiments that the subFECs from each of the sets of FEC parity codes $FEC_1$, $FEC_2$ to $FEC_M$ relating to the ADTs $ADT_1$, $ADT_2$ to $ADT_M$ may be distributed to the various ADTs in turn.

It is to be further understood in some embodiments that each ADT may have a plurality of subFECs appended to it. Furthermore, the plurality of subFECs which may have been mapped and distributed to a particular ADT may be related to ADTs corresponding to different streams.

In some embodiments the subFECs relating to the first stream may be distributed to the various ADTs by the process of mapping the subFECs according to the method of ascending index order as described previously.

Further, according to some embodiments the subFECs relating to second and subsequent streams may be distributed to further ADTs by the process of mapping and distributing the respective subFEC using the method of cyclic ascending index order as described above.

It is to be appreciated in some embodiments that the number of subFECs mapped and distributed to a particular ADT may be determined by the number of subsets an ADT is divided.

Figure 12 depicts the distribution of subFECs for each stream over the different ADTs for the example system comprising the three multimedia streams $S_1$, $S_2$ and $S_3$ as described above. It is to be understood that figure 12 depicts the distribution of subFECs from the viewpoint of a single TDM frame comprising three time sliced burst slots 1231, 1232 and 1233 whereby each time slot is allocated to one of the multimedia streams, $S_1$, $S_2$ and $S_3$.

From figure 12 it may be seen that the subFECs relating to the ADT of the first stream may each be distributed to one of the three streams ADT in ascending index order, thereby forming three MPE-FEC frames 1231, 1232 and 1233. For example, $subFEC_1^1$ 1201 may be distributed to $ADT_1$ 1202, $subFEC_1^2$ 1213 may be appended to $ADT_2$ 1212 and $subFEC_1^3$ 1224 may be appended to $ADT_3$ 1222.

Further, figure 12 also illustrates how the sub-FECs relating to the ADT of a second and subsequent streams may each be mapped and appended to the three multimedia streams MPE-FEC frames in cyclic ascending index order according to an embodiment.

For instance, figure 12 shows how the subFECs relating to the second multimedia stream may be mapped and appended in a cyclical manner by depicting $subFEC_2^1$ as being distributed to $ADT_2$, $subFEC_2^2$ as being distributed to $ADT_3$ and $subFEC_2^3$ as being distributed to $ADT_1$.

Further, figure 12 may also depict how the subFECs relating to the third stream may be also be mapped in a cyclical manner, whereby $subFEC_3^1$ may be distributed to $ADT_3$, $subFEC_3^2$ may be distributed to $ADT_1$ and $subFEC_3^3$ may be distributed to $ADT_2$.

The accumulative affect of the mapping and distribution operation for the subFECs is that each ADT may be appended with a number of subFECs drawn from a different multimedia stream. This accumulative affect may be seen from figure 12.

The step of mapping and distributing the subFECs derived from respective ADTs for each multimedia stream is depicted as processing step 907 in figure 9.

The mapping and distributing operation for each set of FEC parity codes $FEC_1$, $FEC_k$ to $FEC_M$ may be performed by the distributor in 805 in figure 8. The distributor 805 may receive as input the ADTs $ADT_1$ to $ADT_M$ relating to the various multimedia streams from the output of the MPE formatter 802. Additionally, the distributor 805 may receive as further inputs the output from that ADTFEC Generator 803, that is the distributor 805 may receive the sets of subFECs relating to each multimedia streams' ADT $FEC_1$, $FEC_k$ to $FEC_M$. The output from the distributor 805 may comprise the MPE-FEC frames relating to each multimedia stream, which may be depicted in figure 8 as the signals $MPE$-$FEC\_frame_1$, $MPE$-$FEC\_frame_k$ and $MPE$-$FEC\_frame_M$.

In some embodiments the distributor 805 may determine the order and transmission time by which the subFECs relating to each multimedia stream's ADTs are transmitted. In other words the distributor 805 may determine how each subFEC is mapped to a particular multimedia stream's ADT and therefore a particular time slot in the time sliced burst transmission frame.

It is to be understood that it is the mapping process of the subFECs to the various multimedia streams ADTs which determines the transmission times of the subFECs, since each multimedia stream's ADT has an allocated time sliced burst slot within the time sliced burst transmission frame. Therefore the distributor 805 may ensure that any subFEC may be received at the receiver before the allotted decoding time of the multimedia encoded frame or frames to which it is associated by ensuring the appropriate time slot is used to convey it.

In some embodiments the subFECs contained within a particular set of FECs may not be distributed to ADTs of all the multimedia streams.

As depicted in figured 8 the output from the distributor 805 may be connected to the input of the time slicing scheduler 807. This connection may be used to convey the MPE-FEC frame for each multimedia stream to the time slicing (TS) scheduler 807. The time slicing (TS) scheduler 807 may then schedule (in time) the MPE-FEC frames relating to the various multimedia streams for transmission in the form of time sliced bursts.

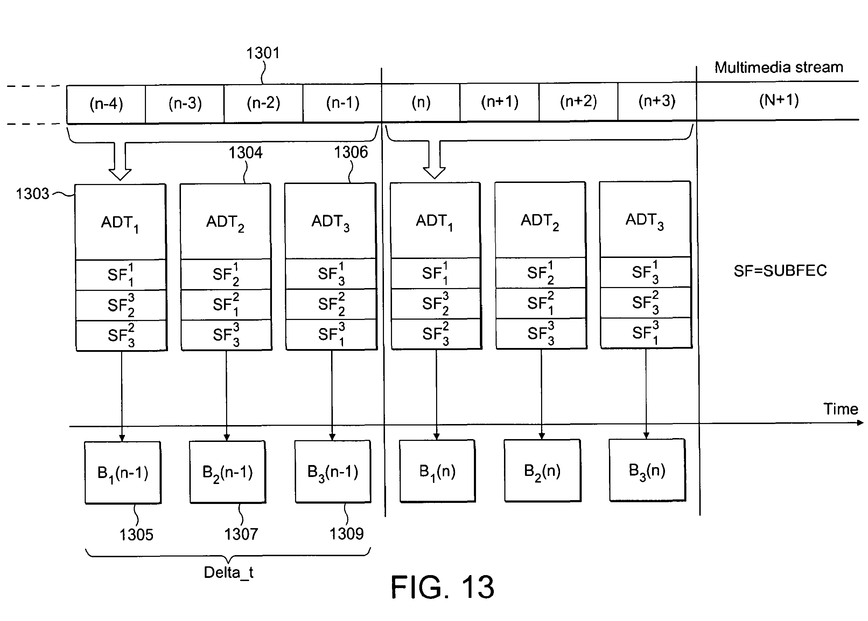

Figure 13 illustrates how MPE-FEC frames relating to a plurality of multimedia streams may be scheduled for transmission as time sliced bursts in the form of a payload of TS packets according to embodiments of the application.

In order to assist in the understanding of the application the scheduling by the time slicing scheduler 807 may be appreciated from the viewpoint of a broadcast programme stream relating to the content of a first multimedia stream.

It is to be further appreciated that figure 13 considers the transmission of time sliced bursts from the viewpoint of a system comprising three multimedia streams.

However it is to be understood that the number of multimedia streams depicted in figure 13 may not be representative of the actual number of multimedia streams processed by systems deploying other embodiments, and that other embodiments of the invention may process a different number of multimedia streams.

Figure 13 illustrates a timeline of a first multimedia stream 1301 which may be divided into a plurality of frames of which (n-4)th, to (n+1)th frames are shown in the figure 13. Each frame of the first multimedia stream may be encoded as a frame of data by an instance of the content encoder 302_1. The encoded frame may then be encapsulated as an IP datagram by an instance of the IP server 304_1 and passed to the MPE formatter 802 which may convert a number of consecutive encoded IP datagram frames into an application data table $ADT_1$. In this illustration of an embodiment four consecutive frames of encoded multimedia data may be allocated to each ADT.

The process may be repeated for the two other multimedia streams thereby forming ADTs $ADT_2$ and $ADT_3$.

Each ADT may then be divided into a number of sub ADTs and parity codes may then be generated for each of these sub ADTs in turn by the ADTFEC generator 803. The parity codes for each of the sub ADTs, which may otherwise be known as subFECs codes, may then be mapped and distributed to the ADTs $ADT_1$, $ADT_2$ and $ADT_3$ from the various multimedia streams by the distributor 805.

$ADT_1$ with mapped subFECs for the first multimedia stream may form $MPE\text{-}FEC\_frame_1$ 1303 and be transmitted as time sliced burst $B_1(n-1)$ 1305 in figure 13.

The next time sliced burst $B_2(n-1)$ 1307 may be formed from the $MPE\text{-}FEC\_frame_2$ 1304 relating to the second stream.

Finally, the time sliced burst $B_3(n-1)$ 1309 may be formed from the $MPE\text{-}FEC\_frame_3$ 1306 relating to the third stream.

It is to be understood in this particular illustration of some examples a time sliced burst frame for transmission at a time instance may comprise three time sliced bursts $B_1$, $B_2$ and $B_3$, each one relating to information from a different stream. The length of time associated with the time sliced burst frame may determine when the next time sliced burst for a particular stream is sent. This time period may be known as the delta_t and may be determined by the time slice (TS) scheduler 807. This time period determines the length of time between successive bursts of a stream.

Typically in some examples the delta_t time value may be included in each MPE section header. By deploying such a mechanism enables the transmitter 102 to vary the interval of time between consecutive time slices of the stream.

Further, in some embodiments MPE section headers may further comprise information relating to the distribution of the subFECs within other MPE-FEC frames which may be transmitted in subsequent time slots as part of the same time sliced burst transmission frame For example the MPE section headers for the first stream ADT $ADT_1$ may contain information indicating that subFECs $subFEC_1^2$ and $subFEC_1^3$ are transmitted in time slots associated with the MPE-FEC frames $MPE\text{-}FEC\_frame_2$ and $MPE\text{-}FEC\_frame_3$.

It is to be understood in this particular example system that a time sliced burst frame may comprise three time sliced bursts, and that each time sliced sliced burst may be assigned to a different multimedia stream.

The process of forming the MPE-FEC frames into time sliced bursts for each multimedia stream may also involve fragmenting MPE sections into a number of MPEG-2 Transport Stream (TS) packets. Groups of TS packets may then be formed into a payload suitable for transmission as a time sliced burst. Typically in examples of the invention, the fragmentation into TS packets may involve the generation of a TS header for each TS packet.

It is to be further understood that some examples are not limited to transporting the time sliced bursts in the form of MPEG-2 TS packets, and that other examples may transport the time sliced bursts comprising MPE-FEC frames using any suitable transport stream protocol. For example, some examples may transport the time sliced bursts comprising the MPE-FEC frames using the transport protocols associated with hyper text transport protocol (HTTP) progressive downloading.

The step of converting each MPE-FEC frame to transport stream (TS) packets and forming a time sliced burst containing the MPE-FEC frame in the form of TS packets is shown as processing step 909 in figure 9.

It is to be understood that the processing steps 901 to 909 outlining the formation of the MPE-FEC frame and consequently the time sliced burst for each IP datagram stream may be performed on a MPE-FEC frame basis, and that each MPE-FEC frame may contain a number of consecutive frames of an encoded multimedia stream.

Further, it is to be understood that the processing steps 901 to 909 may be performed for each of a plurality of multimedia streams, whereby a time sliced burst may be formed for each multimedia stream in order to be transmitted as part of the same time sliced burst frame. Each time sliced burst frame may then correspond to a particular segment of time for each of the plurality of multimedia streams.

The general processing step of converting a number of IP datagrams into time sliced bursts suitable for transmission by a transport stream packet based network is shown as processing step 707 in figure 7.

The output from the TS scheduler 807 may be connected to the input of the TS multiplexer 308.

The time sliced burst payloads comprising groups of TS packets may then be sent to the TS multiplexer 308 for multiplexing with other MPEG2-TS streams.

In some examples the multiplexing employed by the TS multiplexer may utilise frequency division techniques where a plurality of streams may be multiplexed as different frequency bands.

In other examples the time sliced burst data comprising the MPE-FEC frames may be transmitted by the transmitter on a single frequency band, in other words there may be no frequency division multiplexing with other TS data streams.

The step of multiplexing the time sliced bursts with other transport stream packets from other data streams is shown as the processing step 709 in figure 7.

The output from the TS multiplexer 308 may be connected to the input to the TS transmitter 310, whereby the TS data streams may be conveyed and transmitted by the transmitter 310 as signal 112 to the communication network 104.

Thus in some embodiments there may be apparatus comprising at least one processor and at least one memory including computer program code the at least one memory and the computer program code configured to, with the at least one processor, cause the apparatus at least to perform: dividing a section of an encoded multimedia signal into at least two segments depending on a time based decoding criteria; determining an error correction code for each of the at least two time segments; and associating the error correction code for each of the at least two time segments with the section of the encoded multimedia signal and with a section of at least one further encoded multimedia signal.

The receiver 106 may be arranged to receive the signal 114 from the communications network 104 and output at least one reconstructed multimedia stream 116.

In those examples where the transmitted signal 112 may be formed at the transmitter 102 by frequency division multiplexing a plurality of multimedia streams, the receiver 106 may be arranged to receive only the frequency band of the signal 114 which comprises data formed into individual time sliced bursts.

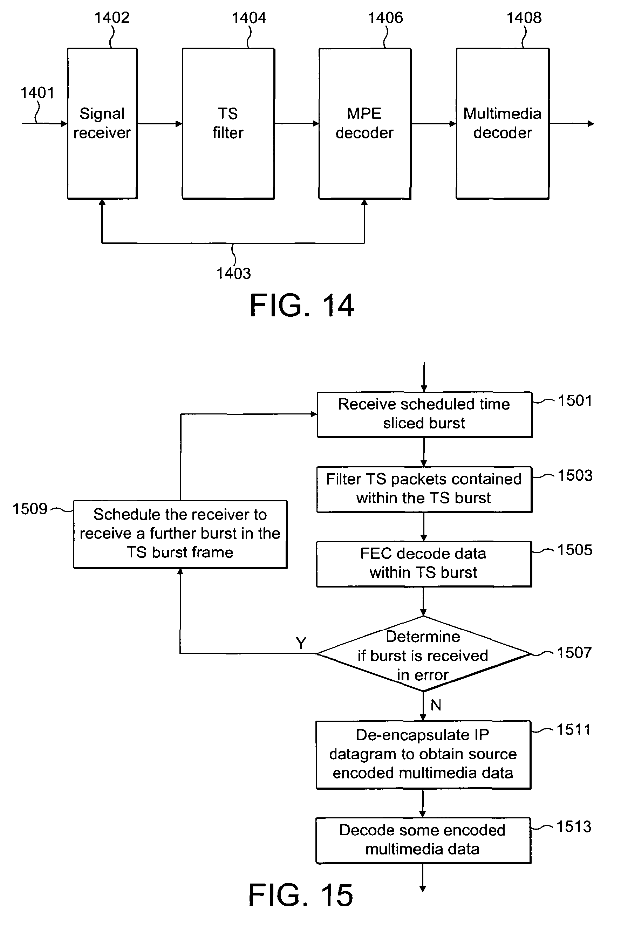

To further assist the understanding of the invention the operation of the receiver 106 implementing some examples are shown in figure 14. In summary the receiver comprises: a receiver configured to receive a signal within a time slot of a transmission period, wherein the signal comprises at least in part an error control coded segment of encoded multimedia data and at least one error correction code; and a decoder configured to: determine whether the error control coded segment of encoded multimedia data and the at least one error correction code has been received with at least one error by error control decoding the error control coded segment of encoded multimedia data with the at least one error correction code; determine whether the at least one error can be corrected by the at least one error correction code; and determine when to receive a further signal.

It is to be understood that the following receiver examples may not fall within the scope of the appended claims.

The receiver 106 comprises an input 1401 whereby the received signal 114 may be received. The input 1401 may be connected to the signal receiver 1402 which may comprise the receive circuitry necessary to receive the signal 114. The output from the signal receiver 1402 may comprise a time sliced burst signal packaged as transport stream protocol signal.

The transport stream protocol signal may then be conveyed to the transport stream (TS) filter 1404 which may filter the received transport stream into TS packets directed specifically to the receiver 106. The TS packets from the TS filter 1404 may be passed to the input of the MPE decoder 1406 for further processing.

The MPE decoder 1406 may provide the necessary functionality to de-encapsulate the multimedia payload contained within the input TS packet stream. This encoded multimedia payload may then be conveyed to the multimedia decoder 1408 via a connection from the output of the MPE decoder 1406.

Additionally, the MPE decoder 1406 may comprise a further output which may be connected to a further input of the signal receiver 1402. This further output from the MPE decoder 1406 may be used to convey a receive circuitry power on/off signal 1403 to the receiver 1402.

The input to the multimedia decoder 1408 may be connected to the output of the MPE decoder 1406. The multimedia decoder 1408 may then receive the encoded multimedia payload from the MPE decoder 1406 and decode its content in order to form the multimedia stream.

The operation of these components is described in more detail with reference to the flow chart in figure 15 showing the operation of the receiver 106 for the situation of receiving a time sliced burst.

It is to be appreciated that figure 15 depicts the operation of the receiver 106 from the view point of receiving a scheduled time sliced burst. In other words a time sliced burst at a time delta_t from the previously scheduled received time sliced burst. Consequently, the steps depicted in figure 15 are those steps performed between the receiving of one scheduled time sliced burst to the next scheduled time sliced burst delta_t seconds later.

The signal receiver 1402 may comprise receive circuitry which may be arranged to receive a particular frequency band of the frequency multiplexed signal 114. In examples this frequency band may comprise a time sliced burst stream of which a number of time sliced bursts may contain multimedia data for the particular receiver 121.

It is to be understood in some examples that the following processing stages may only require those time sliced bursts from the time sliced burst stream which contain media and FEC data relevant for the particular receiver 106. In other words, the receive circuitry within the receiver 1402 may not need to receive every time sliced burst within the time sliced burst frame, rather it may only be required to receive those time sliced bursts destined for decoding by subsequent stages within the receiver 106.

In some examples the receive circuitry within the signal receiver 1402 may be turned off during periods when the receiver is not required to receive any time sliced bursts. During periods when the signal receiver 1402 may be required to receive a time sliced burst it may be turned on in preparation of receiving the data.

In some examples the act of turning on and off the receive circuitry within the signal receiver 1402 may be effectuated by an additional input to the signal receiver 1402. This additional input may be connected to and controlled by the MPE decoder 1406, via the signal connection 1403.

The step of receiving the time sliced burst which has been scheduled to be received by the signal receiver 1402 is shown as processing step 1501 in figure 15.

It is to be understood in some examples that each time sliced burst received by the signal receiver 1402 when the receive circuitry is turned on may comprise a plurality of TS packets. The time sliced burst of TS packets may then be passed to the TS filter 1404 for further processing.

In some examples the TS packets may have been formed at the transmitter 102 according to the MPEG-2 Transport Stream protocol.

The TS packets of the time sliced burst may be received by the TS filter 1404. The TS filter may in some examples filter the contents of the time sliced burst in order to isolate data associated with particular multimedia streams for subsequent processing. This may be required in instances where each time sliced burst conveys data associated with a number of different multimedia streams.

The process of filtering the TS packets contained within a time sliced burst may be depicted by the processing step 1503 in figure 15.

The TS packets containing data associated with a particular multimedia stream may be passed from the TS filter 1404 to the MPE decoder 1406. The MPE decoder 1406 may then de-encapsulate the received TS packets contained within the received time sliced burst stream as well as the MPE and MPE-FEC sections contained by the received TS packets, and form the MPE-FEC frame from the payloads of the MPE and MPE-FEC sections. When the MPE decoder de-encapsulates MPE and MPE-FEC sections, it may also decode the MPE section header.

Once the MPE decoder 1406 has formulated the MPE-FEC frame which was conveyed in the time sliced burst the MPE decoder 1406 may in some examples decode the associated MPE-FEC frame header.

In some examples the MPE section header or the MPE-FEC frame header may comprise delta_t information. Further, the MPE section header or the MPE-FEC frame header may also comprise further information relating to the distribution of further subFECs relating to the ADT contained within received MPE-FEC frame. In other words, the further information may indicate which of the subsequent time slots within the received time sliced burst frame the further subFECs are conveyed.

It is to be understood that in some examples the section header may be protected with additional error check data at the transmitter 102. For example, some examples may use a cyclic redundancy check (CRC) as a form of error detection data. This error detection data may be used by the MPE decoder 1406 in order to determine if the header information has been received in error.

Once the delta_t information has been identified, this may be used by the MPE decoder 1406 to determine when the next time sliced burst for the particular multimedia stream is due for reception at the signal receiver 1402.

In some examples the delta_t information may then be used in order to determine the point in time at which the receive circuitry within the signal receiver 1402 may be turned on in preparation for receiving the time sliced burst. The delta_t information may then be used to generate a signal for instructing the signal receiver 1402 to turn on the receive circuitry.

In some examples the delta_t information may indicate the start of the next time sliced burst containing a further subFEC relating to the ADT being decoded. In these examples the next time sliced burst may comprise the ADT and subFECs for a further in addition to the further subFEC relating to the ADT being decoded. In these examples the delta_t information may indicate the start of the transmission of the next subFEC relating to the ADT being decoded. In other words, the delta_t information may indicate a point of time within a further time sliced burst or an MPE-FEC frame.

In some examples this signal may be conveyed to the signal receiver 1402 along the signal connection 1403.

Once the identified time sliced burst has been received by the signal receiver 1402, the MPE decoder 1406 may determine that the receive circuitry in the signal receiver 1402 no longer needs to remain active. This may occur in examples where the MPE decoder 1406 has determined that the receiver has received all relevant information for decoding the current time sliced burst.

If the MPE decoder 1406 determines that the receive circuitry in the signal receiver 1402 may no longer be required to remain active. The MPE decoder 1406 may convey a signal to the signal receiver 1402 via the signal connection 1403 instructing the signal receiver 1402 to turn off the receive circuitry.

The MPE decoder 1406 may also comprise error detection and correction functionality which enables the MPE decoder 1406 to determine if the ADT data associated with the received time sliced burst has been received in error.

The step of FEC decoding the MPE associated with the received time sliced burst is shown as processing step 1505 in figure 15.

In some examples the number of errors induced during transmission may be within the minimum coding distance of the FEC parity code of the subFEC included in the received time sliced burst and as such the errors may be correctable by the use of the parity check generator matrix. In such examples the MPE decoder 1406 may use the received subFEC parity codes associated with the received MPE-FEC frame in order to decode the ADT contained within the MPE-FEC frame.

For example, a receiver 106 may be configured to receive the MPE-FEC frame associated with a first multimedia stream. In the example system comprising three multimedia streams as outlined in figures 12 and 13 this MPE-FEC frame may be referred to as $MPE\text{-}FEC\_frame_1$. In such an example, the MPE decoder 1406 may initially attempt to decode the received ADT ($ADT_1$) associated with the MPE-FEC frame of the first multimedia stream with the corresponding transported subFEC $subFEC_1^1$.

In other examples the ADT data associated with a particular multimedia stream may have been corrupted with errors to such an extent that the ADT information cannot be corrected by the correspondingly transported subFEC codes. For example, in terms of the above outlined system the number of errors induced by the transmission of the time sliced burst associated with $MPE\text{-}FEC\_frame_1$ maybe too great to be corrected by the use of the corresponding subFEC $subFEC_1^1$. In other words the number of errors induced by the transmission of the burst is greater than the coding distance of the FEC code.

In such examples, the MPE decoder 1406 may determine that a particular subset of the ADT data may be decoded with the use of further sub sets of FEC parity bits. In such instances the particular subset of the ADT data may comprise fewer encoded multimedia frames with each one comprising a lower encoding layer. In other words in such instances the MPE decoder 1406 may determine that a second or subsequent sub set of the ADT, such as $ADT_1^2$, may be FEC decoded by using the associated subFEC. Which in this example would be $subFEC_1^2$.

In such examples the MPE decoder 1406 may inspect the MPE section headers or the MPE-FEC frame header of the received MPE-FEC frame in order to determine in which of the subsequent time slots the further subFECs relating to the ADT within the received MPE-FEC frame are placed. For example, the MPE decoder 1406 may inspect any MPE section header or the MPE-FEC frame header in the received *MPE-FEC_frame$_1$* in order to determine in which time slot and therefore which MPE-FEC frame the subFEC associated with the second sub set of the received ADT is located. In other words the MPE decoder 1406 may inspect any MPE section header or the MPE-FEC frame header in *MPE-FEC_frame$_1$* in order to determine in which time slot the subFEC $subFEC_1^2$ is due.

In this particular example the MPE decoder 1406 may instruct the signal receiver 1402 to turn on the receive circuitry in order to receive a further time sliced burst or a part of a time slice burst containing a further subFEC. It is to be understood that this further time sliced burst may contain an MPE-FEC frame (or ADT) associated with a further multimedia stream, and that this further time sliced burst may be associated with time slots which follow the time sliced burst which has been received in error.

In some examples the MPE decoder 1406 may instruct the signal receiver 1402 to turn on its receive circuitry in order to receive a time sliced burst or a part of a time slice burst containing a further subFEC following the current time sliced burst which has been detected to be in error after FEC decoding. For instance in the outlined example system described above the MPE decoder 1406 may instruct the signal receiver 1402 to turn on its receive circuitry to receive the time sliced burst conveying the MPE-FEC frame *MPE-FEC_frame$_2$* which in turn comprises the subFEC $subFEC_1^2$ or the part of the time sliced burst conveying the MPE-FEC frame *MPE-FEC_frame$_2$* that contains the subFEC $subFEC_1^2$.

In order to assist in the understanding the current and immediately proceeding time sliced bursts may be depicted as bursts 1305 and 1307 in figure 13. According to figure 13 the current time sliced burst 1305 may be depicted as comprising ADT data associated with a first multimedia stream, and the immediately proceeding time sliced burst 1307 may be depicted as comprising ADT data associated with a second multimedia stream.

The transport stream packets comprising the immediately proceeding time sliced burst 1307 may be passed to the input of the MPE decoder 1406. Upon receiving the transport stream packets associated with the immediately proceeding time sliced burst 1307 the MPE decoder 1406 may determine the subFEC associated with the second subset of the ADT of the first stream $ADT_1^2$ $subFEC_1^2$ which may be depicted as 1213 in figure 12.

In some examples the MPE decoder 1406 may then use the sub set FEC parity codes from the immediately proceeding time sliced burst in order to decode the lower scalable layer and/or a particular frame or a number of frames of the frames comprising a partition in the time line of source encoded data of the current time sliced burst's ADT. In other words in terms of the above example the sub set of FEC parity codes $subFEC_1^2$ may be used to decode the source encoded bits associated with the second sub set ADT $ADT_1^2$ from the first stream.

Further, in some examples the MPE decoder 1406 may further instruct the signal receiver 1402 via the signal connection 1403 to turn on the receive circuitry in order to receive the time sliced burst immediately following the immediately proceeding current time sliced burst. In other words in terms of the above example this time sliced burst may be depicted as burst 1309 in figure 13 and may be viewed as comprising the ADT data associated with a third multimedia stream *MPE$_3$*.

From this newly received time sliced burst the MPE decoder 1406 may then determine a further sub set of FEC parity codes which may be associated with a further subset of the first multimedia streams ADT. In some examples this further subset of the ADT of the first multimedia stream may be associated with a higher coding layer of the scalable source encoded multimedia stream. Consequently, the MPE decoder 1406 may be able to FEC decode a further layer of the scalable coding layer with this received further subset.

It is to be further understood in some examples that the parity codes in the further subFEC such as $subFEC_1^2$ and $subFEC_1^3$ may be calculated over fewer encoded multimedia frames than the corresponding ADT. This may ensure that by the time the sub set of the ADT data corresponding to the further received subFEC is decoded it is still possible to play the decoded multimedia data within the real time line of the multimedia stream. This may have the technical effect of not causing any delay in the playback of the multimedia data during error conditions.

For example if $ADT_1$ is received in error after FEC decoding with $subFEC_1^1$, then the MPE decoder 1406 may instruct the receiver to receive the next time sliced burst associated with the second MPE-FEC frame $MPE\text{-}FEC\_frame_2$. From this MPE-FEC frame the MPE decoder 1406 is able to retrieve the subFEC $subFEC_1^2$ associated with a subset of the $ADT_1$ $ADT_1^2$. The number of encoded frames encompassed by the second subset of the ADT may be such that once it is FEC decoded by $subFEC_1^2$ it may still be decoded by the multimedia decoder 1408 in order that it can be played out within the play back time line of the decoder. In other words the decoder does not have to wait for a valid encoded frame when the ADT data is received in error.

In some examples the parity codes in the further subFEC such as $subFEC_1^2$ and $subFEC_1^3$ may be calculated over fewer encoded multimedia frames than the corresponding ADT. The choice of the encoded frames for the sub set of the ADT may be such that a part of the encoded frames in the sub set of the ADT can be decoded and played within the real time line of the multimedia stream. This may have the technical effect of not causing any delay in the playback of the multimedia data during error conditions. However, this may cause e.g. a lower temporal resolution or frame rate being played. For example, the sub set ADT may contain only the lowest temporal level of video frames starting from the previous intra frame. Correcting such a sub set ADT by decoding the respective subFEC may enable recovery of decoded frames at a low frame rate, where some of the first frames may be decoded too late for being displayed in due time but are still required as reference frames for further frames being decoded and displayed.

In some examples accelerated decoding of sub set ADTs may be applied. In other words, a sub set ADT may be decoded at a pace that is faster than required for real-time decoding and playback of the data contained in the sub set ADT. In particular, accelerated decoding may be applied during instances when the sub set ADT contains a temporal sub set of the frames of the multimedia stream or a sub set of scalable layers of the frames of the multimedia stream. Further, accelerated decoding may enable rendering a part of the frames contained in the sub set ADT within the play back time line.

It is to be understood in some examples the corrupt ADT may be FEC decoded on a scalable layer by scalable layer basis, where each subFEC received may be used to FEC decode a further coding layer. This has the effect of forming the FEC decoded ADT on an aggregated scalable layer by scalable layer basis, where each addition layer adds further source encoded data, thereby improving the potential quality of any subsequently source decoded multimedia stream.

In some examples each subFEC may be calculated over an aggregated set of scalable layers of the ADT and the subFEC parity codes protecting lower aggregated sets of scalable layers. In some examples, a low-density parity code, such as the Raptor code, may be used for the subFEC. This has the effect of not only correcting received ADT data but also improving the FEC decoding capability of the subFEC parity codes for the lower layers.

In some examples iterative decoding of subFECs may be performed. This may be applied when the coding distance of a particular subFEC is sufficient relative to the amount of errors in the particular subFEC and its associated sub set ADT. In this situation the associated sub set ADT may be corrected.

However, in some examples, part of the corrected sub set ADT may also form part of a further sub set ADT. In these examples the further sub set ADT may also be corrected by decoding the subFEC associated with the corrected sub set ADT, providing that the amount of errors in the further sub set ADT is within the correction capability of the subFEC. This process may be iteratively repeated until all subset ADTs are corrected.

In some examples a subFEC may not only comprise forward error correction codes calculated over the respective sub set ADT but may also further comprise a representation of the initial decoding state required for correct decoding of the sub set ADT. An example of the initial decoding state may comprise a redundant encoding of the reference frames required for decoding the video frames contained in the sub set ADT.

In the illustrated example of some examples the further subset of FEC parity codes as contained within the time sliced burst $MPE\text{-}FEC\_frame_3$ may be depicted as $subFEC_1^3$ 1224 in figure 12. In other words the further subFEC may be associated with a third subset of the ADT of the first multimedia stream $ADT_1^3$.

In other examples the selection of sub sets of an ADT may have been in accordance with the type of media encoded, for example a first sub set of the ADT may correspond to the audio part of the multimedia stream and the second subset of the ADT may correspond to the video part of the multimedia stream. In these examples a first sub set of FEC parity bits may have been derived over the audio part of the ADT, and a second subset of FEC parity bits may have been derived over the video part of the ADT.

In such examples the corrupt ADT may be FEC decoded and effectively aggregated on a media type basis, whereby the resulting source encoded data may comprise a subset of media types. For example, the resulting ADT may comprise the audio stream or the video stream of the multimedia stream.

It is to be understood in some examples that the MPE decoder 1406 may instruct the signal receiver 1402 to leave the received circuitry powered on continuously for the receiving of the consecutive time sliced bursts rather than instructing the signal receiver to power up the receive circuitry on a per individual time slice basis.

In some examples this situation may particularly occur when a time sliced burst is received with a large number of transmission errors and the signal receiver 1402 is instructed by the MPE decoder 1406 to receive consecutive time sliced bursts within the same time sliced burst frame.

The step of determining if the MPE contained within the scheduled time sliced burst has been received in error after FEC decoding is depicted as step 1507 in figure 15.

The step of instructing the receiver 1402 to further receive one or more further time sliced bursts within the same time sliced burst frame if the current received time sliced burst is found to be in error is shown as processing step 1509 in figure 15.

It is to be appreciated that the result of the FEC decoding step performed by the MPE decoder 1406 may be the source encoded multimedia data encapsulated in the form of IP datagrams.

In some examples the MPE decoder 1406 may perform an IP datagram de-encapsulation step whereby the encoded multimedia data may be retrieved.

In further examples the IP datagram de-encapsulation step may be performed in a further element to that of the MPE decoder 1406.

The step of IP de-encapsulation of the source encoded multimedia stream is shown as processing step 1511 in figure 15.

The encoded multimedia broadcast data output from the MPE decoder 1406 may be connected to the input of the multimedia decoder 1408.

The multimedia decoder 1408 may then decode the input encoded multimedia stream to produce a decoded multimedia stream.

The step of decoding the encoded multimedia stream is shown as processing step 1513 in figure 15.

The output decoded multimedia stream from the multimedia decoder 1408 may be connected to the output 116 of the receiver 106.

This decoded multimedia stream may then be played out for immediate presentation via the loudspeakers 33 and display 34 in an electronic device 10 such as that depicted in figure 1. Alternatively, the decoded multimedia stream may be stored within the in the data section 24 of the memory 22 of the electronic device 10 for presentation at a later point in time.

It is to be understood by distributing sub sets of FEC parity bits (subFECs) associated with a particular ADT across a number of different time sliced bursts within a time sliced burst frame introduces a level of time diversity into the system.

This arrangement may have the technical effect of counteracting the consequences of bursty error conditions. Where in such conditions the MPE-FEC frame contained within the time sliced burst data may be corrupted to the extent that the errors induced by the channel conditions are not correctable with the FEC parity bits contained within the same burst. In other words the number of errors induced may be greater than the minimum distance of the forward error correction code.

It is to be understood in some examples that forward error correction decoding of the received ADT may be effectuated by marrying each row from the received ADT to its corresponding received parity check bits in order to generate the received codeword. The parity check bits are those bits contained in the one or more received subFECs for the ADT in question.

In some examples there thus may be apparatus comprising at least one processor and at least one memory including computer program code the at least one memory and the computer program code configured to, with the at least one processor, cause the apparatus at least to perform: receiving a signal within a time slot of a transmission period, wherein the signal comprises at least in part an error control coded segment of encoded multimedia data and at least one error correction code; determining whether the error control coded segment of encoded multimedia data and the at least one error correction code has been received with at least one error by error control decoding the error control coded segment of encoded multimedia data with the at least one error correction code; determining whether the at least one error can be corrected by the at least one error correction code; and determining when to receive a further signal.

In some examples the forward error control scheme employed within the transmitter 102 and the receiver 106 may be according to the principles of Reed Solomon Coding.

In further examples the forward error control scheme employed by both the transmitter 102 and the receiver 106 may be according to the principles of any systematic linear block coding scheme such as Hamming codes and Bose Chaudhuri and Hocquenghem (BCH) codes.

It would be appreciated that the application as described above may be implemented as part of any communication system deploying time slicing in order to transmit data.

Thus user equipment may comprise all or parts of the invention described by some of the examples above.

It shall be appreciated that the term user equipment is intended to cover any suitable type of wireless user equipment, such as mobile telephones, portable data processing devices or portable web browsers.

Furthermore elements of a public land mobile network (PLMN) may also comprise all or parts of the invention described by some of the examples above.

In general, the various examples of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Some of the examples may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example digital versatile disc (DVD), compact discs (CD) and the data variants thereof both.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs) and processors based on multi-core processor architecture, as non-limiting examples.

Some of the examples may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

As used in this application, the term circuitry may refer to all of the following: (a) hardware-only circuit implementations (such as implementations in only analogue and/or digital circuitry) and (b) to combinations of circuits and software (and/or firmware), such as and where applicable: (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of circuitry applies to all uses of this term in this application, including in any claims. As a further example, as used in this application, the term circuitry would also cover an implementation of merely a processor (or multiple processors) or portion of a processor and its (or their) accompanying software and/or firmware. The term circuitry would also cover, for example and if applicable to the particular claim element, a baseband integrated circuit or applications processor integrated circuit for a mobile phone or a similar integrated circuit in server, a cellular network device, or other network device.

The term processor and memory may comprise but are not limited to in this application: (1) one or more microprocessors, (2) one or more processor(s) with accompanying digital signal processor(s), (3) one or more processor(s) without accompanying digital signal processor(s), (3) one or more special-purpose computer chips, (4) one or more field-programmable gate arrays (FPGAS), (5) one or more controllers, (6) one or more application-specific integrated circuits (ASICS), or detector(s), processor(s) (including dual-core and multiple-core processors), digital signal processor(s), controller(s), receiver, transmitter, encoder, decoder, memory (and memories), software, firmware, RAM, ROM, display, user interface, display circuitry, user interface circuitry, user interface software, display software, circuit(s), antenna, antenna circuitry, and circuitry.

## Claims

1. A method comprising:

    partitioning (1001) a section of an encoded multimedia signal (1202) into at least two segments and

determining a decoding start of the second of the at least two segments, wherein the decoding start of the second of the at least two segments preceeds a decoding start of the first of the at least two segments;

determining an error correction code (803) for each of the at least two time segments (1201) (1211);

distributing (805) the error correction code for the first of the at least two segments together (1201) with the section of the encoded multimedia signal (1202) such that the section of the encoded multimedia signal (1202) is transmitted together (1231) with its error correction code (1201) determined for the first segment within a time slot of a transmission period (1305); and

distributing (805) the error correction code for the second of the at least two segments (1211) with a section of at least one further encoded multimedia signal (1212) such that the error correction code for the second of the at least two segments (1211) is transmitted together with the section of the at least one further encoded multimedia signal (1212) and its distributed error correction code (1211) within a further time slot of the transmission period (1307) such that the error correction code for the second of the at least two segments (1211) can be received and decoded at a corresponding receiving device before a specified time which is before or at the determined decoding start of the second segment.

2. The method according to claim 1, wherein the specified time corresponds to the time when the decoded multimedia signal associated with the second of the at least two segments of the encoded multimedia signal is scheduled to be played at the receiving device.

3. The method according to claims 1 and 2 further comprising:

signalling that the error correction code for the second of the at least two segments is transmitted within the further time slot of the transmission frame, wherein the signalling comprises:

adding information to a header which is transmitted in the time slot of the transmission period.

4. The method according to claims 1 to 3, wherein the encoded multimedia signal is at least in part generated by using a scalable multimedia encoder comprising a plurality of coding layers, and wherein the encoded multimedia signal comprises a plurality of encoded layers.

5. The method according to any one of claims 1 to 4, wherein the section of the encoded multimedia signal comprises a plurality of internet protocol datagrams, and wherein each internet protocol datagram comprises a plurality of frames of the encoded multimedia signal.

6. The method according to any one of claims 1 to 5, wherein the transmission period is a time sliced burst transmission frame (501), wherein the time sliced burst transmission frame comprises a plurality of time slots (5011) (5012), and wherein data transmitted within a time slot of the transmission period is transmitted as part of a burst within a burst transmission time slot of the time sliced burst transmission frame.

7. An apparatus (10) configured to:

partition (1001) a section of an encoded multimedia signal (1202) into at least two segments and

determining a decoding start of the second of the at least two segments, wherein the decoding start of the second of the at least two segments proceeds a decoding start of the first of the at least two segments;

determine an error correction code (803) for each of the at least two time segments (1201) (1211);

distribute (805) the error correction code for the first of the at least two segments together (1201) with the section of the encoded multimedia signal (1202) such that the section of the encoded multimedia signal (1202) is transmitted together (1231) with its error correction code (1201) determined for the first segment within a time slot of a transmission period (1305); and

distribute (805) the error correction code for the second of the at least two segments (1211) with a section of at least one further encoded multimedia signal (1212) such that the error correction code for the second of the at least two segments (1211) is transmitted together with the section of the at least one further encoded multimedia signal (1212) and with its distributed error correction code (1211) within a further time slot of the transmission period (1307) such that the error correction code for the second (1211) of the at least two segments can be received and decoded at a corresponding receiving device before a specified time which is before or at the decoding start of the second segment.

8. The apparatus according to claim 7, wherein the specified time corresponds to the time when the decoded multimedia signal associated with the second of the at least two segments of the encoded multimedia signal is scheduled to be played at the receiving device.

9. The apparatus according to claims 7 and 8, further configured to perform:

> signalling that the error correction code for the second of the at least two segments is transmitted within the further time slot of the transmission frame, and add information to a header which is transmitted in the time slot of the transmission period.

10. The apparatus according to claims 7 to 9, further configured to perform generating the encoded multimedia signal in at least in part by a scalable multimedia encoding comprising a plurality of coding layers, and wherein the encoded multimedia signal comprises a plurality of encoded layers.

11. The apparatus according to any one of claims 7 to 10, wherein the section of the encoded multimedia signal comprises a plurality of internet protocol datagrams, and wherein each internet protocol datagram comprises a plurality of frames of the encoded multimedia signal.

12. The apparatus according to any one of claims 7 to 11, wherein the transmission period is a time sliced burst transmission frame, wherein the time sliced burst transmission frame comprises a plurality of time slots, and wherein data transmitted within a time slot of the transmission period is transmitted as part of a burst within a burst transmission time slot of the time sliced burst transmission frame.

13. A computer program code configured to realize the actions of the method of any of claims 1 to 6, when executed by a processor.

**Patentansprüche**

1. Verfahren, umfassend:

> Teilen (1001) eines Abschnitts eines codierten Multimediasignals (1202) in mindestens zwei Segmente und
> Bestimmen eines Decodierungsanfangs des zweiten der mindestens zwei Segmente, wobei der Decodierungsanfang des zweiten der mindestens zwei Segmente einem Decodierungsanfang des ersten der mindestens zwei Segmente vorangeht;
> Bestimmen eines Fehlerkorrekturcodes (803) für jedes der mindestens zwei Zeitsegmente (1201) (1211);
Verteilen (805) des Fehlerkorrekturcodes für das erste der mindestens zwei Segmente zusammen (1201) mit dem Abschnitt des codierten Multimediasignals (1202) derart, dass der Abschnitt des codierten Multimediasignals (1202) zusammen mit seinem für das erste Segment bestimmten Fehlerkorrekturcode (1201) innerhalb eines Zeitschlitzes einer Übertragungsperiode (1305) übertragen wird (1231); und
Verteilen (805) des Fehlerkorrekturcodes für das zweite der mindestens zwei Segmente (1211) mit einem Abschnitt mindestens eines weiteren codierten Multimediasignals (1212) derart, dass der Fehlerkorrekturcode für das zweite der mindestens zwei Segmente (1211) zusammen mit dem Abschnitt des mindestens einen weiteren Multimediasignals (1212) und seinem verteilten Fehlerkorrekturcode (1211) innerhalb eines weiteren Zeitschlitzes der Übertragungsperiode (1307) übertragen wird, so dass der Fehlerkorrekturcode für das zweite der mindestens zwei Segmente (1211) an einer korrespondierenden Empfangsvorrichtung vor einer spezifizierten Zeit, die vor oder an dem bestimmten Decodierungsanfang des zweiten Segments ist, empfangen und decodiert werden kann.

2. Verfahren nach Anspruch 1, wobei die spezifizierte Zeit mit der Zeit korrespondiert, zu der das mit dem zweiten der mindestens zwei Segmente assoziierte decodierte Multimediasignal terminiert ist, an der Empfangsvorrichtung wiedergegeben zu werden.

3. Verfahren nach Anspruch 1 und 2, ferner umfassend:

> Signalisieren, dass der Fehlerkorrekturcode für das zweite der mindestens zwei Segmente innerhalb des weiteren Zeitschlitzes des Übertragungsrahmens übertragen wird, wobei das Signalisieren umfasst:
>
>> Hinzufügen von Informationen zu einem Kopf, der in dem Zeitschlitz der Übertragungsperiode übertragen wird.

4. Verfahren nach Anspruch 1 bis 3, wobei das codierte Multimediasignal mindestens teilweise durch Verwendung eines skalierbaren Multimedia-Codierers, der eine Vielzahl von Codierungsschichten umfasst, erzeugt wird und wobei das codierte Multimediasignal eine Vielzahl von codierten Schichten umfasst.

5. Verfahren nach einem der Ansprüche 1 bis 4, wobei der Abschnitt des codierten Multimediasignals eine Vielzahl von Internetprotokoll-Datagrammen umfasst und wobei jedes Internetprotokoll-Datagramm eine Vielzahl von Rahmen des codierten Multimediasignals umfasst.

6. Verfahren nach einem der Ansprüche 1 bis 5, wobei die Übertragungsperiode ein Burst-Übertragungsrahmen mit Zeitschlitzen (501) ist, wobei der Burst-Übertragungsrahmen mit Zeitschlitzen eine Vielzahl von Zeitschlitzen (5011) (5012) umfasst und wobei Daten, die innerhalb eines Zeitschlitzes der Übertragungsperiode übertragen werden, als Teil eines Bursts innerhalb eines Burst-Übertragung-Zeitschlitzes des Burst-Übertragungsrahmens mit Zeitschlitzen übertragen werden.

7. Vorrichtung (10), konfiguriert zum:

   Teilen (1001) eines Abschnitts eines codierten Multimediasignals (1202) in mindestens zwei Segmente und
   Bestimmen eines Decodierungsanfangs des zweiten der mindestens zwei Segmente, wobei der Decodierungsanfang des zweiten der mindestens zwei Segmente einem Decodierungsanfang des ersten der mindestens zwei Segmente vorangeht;
   Bestimmen eines Fehlerkorrekturcodes (803) für jedes der mindestens zwei Zeitsegmente (1201) (1211);
   Verteilen (805) des Fehlerkorrekturcodes für das erste der mindestens zwei Segmente zusammen (1201) mit dem Abschnitt des codierten Multimediasignals (1202) derart, dass der Abschnitt des codierten Multimediasignals (1202) zusammen mit seinem für das erste Segment bestimmten Fehlerkorrekturcode (1201) innerhalb eines Zeitschlitzes einer Übertragungsperiode (1305) übertragen wird (1231); und
   Verteilen (805) des Fehlerkorrekturcodes für das zweite der mindestens zwei Segmente (1211) mit einem Abschnitt mindestens eines weiteren codierten Multimediasignals (1212) derart, dass der Fehlerkorrekturcode für das zweite der mindestens zwei Segmente (1211) zusammen mit dem Abschnitt des mindestens einen weiteren Multimediasignals (1212) und mit seinem verteilten Fehlerkorrekturcode (1211) innerhalb eines weiteren Zeitschlitzes der Übertragungsperiode (1307) übertragen wird, so dass der Fehlerkorrekturcode für das zweite (1211) der mindestens zwei Segmente an einer korrespondierenden Empfangsvorrichtung vor einer spezifizierten Zeit, die vor oder an dem Decodierungsanfang des zweiten Segments ist, empfangen und decodiert werden kann.

8. Vorrichtung nach Anspruch 7, wobei die spezifizierte Zeit mit der Zeit korrespondiert, zu der das mit dem zweiten der mindestens zwei Segmente des codierten Multimediasignals assoziierte decodierte Multimediasignal terminiert ist, an der Empfangsvorrichtung wiedergegeben zu werden.

9. Vorrichtung nach Anspruch 7 und 8, ferner konfiguriert zum Durchführen von:

   Signalisieren, dass der Fehlerkorrekturcode für das zweite der mindestens zwei Segmente innerhalb des weiteren Zeitschlitzes des Übertragungsrahmens übertragen wird, und Hinzufügen von Informationen zu einem Kopf, der in dem Zeitschlitz der Übertragungsperiode übertragen wird.

10. Vorrichtung nach Anspruch 7 bis 9, ferner konfiguriert zum Durchführen von Erzeugen des codierten Multimediasignals mindestens teilweise durch eine skalierbare Multimedia-Codierung, umfassend eine Vielzahl von Codierungsschichten, und wobei das codierte Multimediasignal eine Vielzahl von codierten Schichten umfasst.

11. Vorrichtung nach einem der Ansprüche 7 bis 10, wobei der Abschnitt des codierten Multimediasignals eine Vielzahl von Internetprotokoll-Datagrammen umfasst und wobei jedes Internetprotokoll-Datagramm eine Vielzahl von Rahmen des codierten Multimediasignals umfasst.

12. Vorrichtung nach einem der Ansprüche 7 bis 11, wobei die Übertragungsperiode ein Burst-Übertragungsrahmen mit Zeitschlitzen ist, wobei der Burst-Übertragungsrahmen mit Zeitschlitzen eine Vielzahl von Zeitschlitzen umfasst und wobei Daten, die innerhalb eines Zeitschlitzes der Übertragungsperiode übertragen werden, als Teil eines Bursts innerhalb eines Burst-Übertragung-Zeitschlitzes des Burst-Übertragungsrahmens mit Zeitschlitzen übertragen werden.

13. Computerprogrammcode, konfiguriert zum Realisieren der Aktionen des Verfahrens nach einem der Ansprüche 1 bis 6, wenn er von einem Prozessor ausgeführt wird.

**Revendications**

1. Procédé comprenant les étapes suivantes :

   partitionner (1001) une section d'un signal multimédia codé (1202) en au moins deux segments et
   déterminer un début de décodage du deuxième desdits deux segments, le début de décodage du deuxième desdits deux segments précédant un début de décodage du premier desdits deux segments ;

déterminer un code de correction d'erreur (803) pour chacun desdits deux segments de temps (1201) (1211) ;

distribuer (805) le code de correction d'erreur pour le premier desdits deux segments conjointement (1201) avec la section du signal multimédia codé (1202) de sorte que la section du signal multimédia codé (1202) soit transmise conjointement (1231) avec son code de correction d'erreur (1201) déterminé pour le premier segment à l'intérieur d'un intervalle de temps d'une période de transmission (1305) ; et

distribuer (805) le code de correction d'erreur pour le deuxième desdits deux segments (1211) avec une section d'au moins un autre signal multimédia codé (1212) de sorte que le code de correction d'erreur pour le deuxième desdits deux segments (1211) soit transmis conjointement avec la section dudit autre signal multimédia codé (1212) et son code de correction d'erreur distribué (1211) à l'intérieur d'un autre intervalle de temps de la période de transmission (1307) de sorte que le code de correction d'erreur pour le deuxième desdits deux segments (1211) puisse être reçu et décodé au niveau d'un dispositif de réception correspondant avant un temps spécifié qui précède ou qui est à un début de décodage déterminé du deuxième segment.

2. Procédé selon la revendication 1, dans lequel le temps spécifié correspond au temps auquel le signal multimédia décodé associé au deuxième desdits deux segments du signal multimédia codé est planifié pour être lu au niveau du dispositif de réception.

3. Procédé selon les revendications 1 et 2 comprenant en outre les étapes suivantes :

signaler que le code de correction d'erreur pour le deuxième desdits deux segments est transmis à l'intérieur de l'autre intervalle de temps de la trame de transmission, l'étape de signalisation comprenant :

ajouter des informations à un en-tête qui est transmis dans l'intervalle de temps de la période de transmission.

4. Procédé selon les revendications 1 à 3, dans lequel le signal multimédia codé est au moins en partie généré en utilisant un codeur multimédia extensible comprenant une pluralité de couches de codage, et le signal multimédia codé comportant une pluralité de couches codées.

5. Procédé selon l'une quelconque des revendications 1 à 4, dans lequel la section du signal multimédia codé comprend une pluralité de datagrammes de protocole Internet, et chaque datagramme de protocole Internet comportant une pluralité de trames du signal multimédia codé.

6. Procédé selon l'une quelconque des revendications 1 à 5, dans lequel la période de transmission est une trame de transmission de rafales à découpage temporel (501), la trame de transmission de rafales à découpage temporel comprenant une pluralité d'intervalles de temps (5011) (5012), et des données transmises à l'intérieur d'un intervalle de temps de la période de transmission étant transmises comme partie d'une rafale à l'intérieur d'un intervalle de temps de transmission de rafales de la trame de transmission de rafales à découpage temporel.

7. Appareil (10) configuré pour :

partitionner (1001) une section d'un signal multimédia codé (1202) en au moins deux segments et

déterminer un début de décodage du deuxième desdits deux segments, le début de décodage du deuxième desdits deux segments précédant un début de décodage du premier desdits deux segments ;

déterminer un code de correction d'erreur (803) pour chacun desdits deux segments de temps (1201) (1211) ;

distribuer (805) le code de correction d'erreur pour le premier desdits deux segments conjointement (1201) avec la section du signal multimédia codé (1202) de sorte que la section du signal multimédia codé (1202) soit transmise conjointement (1231) avec son code de correction d'erreur (1201) déterminé pour le premier segment à l'intérieur d'un intervalle de temps d'une période de transmission (1305) ; et

distribuer (805) le code de correction d'erreur pour le deuxième desdits deux segments (1211) avec une section d'au moins un autre signal multimédia codé (1212) de sorte que le code de correction d'erreur pour le deuxième desdits deux segments (1211) soit transmis conjointement avec la section dudit autre signal multimédia codé (1212) et avec son code de correction d'erreur distribué (1211) à l'intérieur d'un autre intervalle de temps de la période de transmission (1307) de sorte que le code de correction d'erreur pour le deuxième (1211) desdits deux segments puisse être reçu et décodé au niveau d'un dispositif de réception correspondant avant un temps spécifié qui précède ou qui est à un début de décodage du deuxième segment.

**8.** Appareil selon la revendication 7, dans lequel le temps spécifié correspond au temps auquel le signal multimédia décodé associé au deuxième desdits deux segments du signal multimédia codé est planifié pour être lu au niveau du dispositif de réception.

**9.** Appareil selon les revendications 7 et 8, configuré en outre pour : signaler que le code de correction d'erreur pour le deuxième desdits deux segments est transmis à l'intérieur de l'autre intervalle de temps de la trame de transmission, et ajouter des informations à un en-tête qui est transmis dans l'intervalle de temps de la période de transmission.

**10.** Appareil selon les revendications 7 à 9, configuré en outre pour générer le signal multimédia codé au moins en partie par un codage multimédia extensible comprenant une pluralité de couches de codage, et le signal multimédia codé comportant une pluralité de couches codées.

**11.** Appareil selon l'une quelconque des revendications 7 à 10, dans lequel la section du signal multimédia codé comprend une pluralité de datagrammes de protocole Internet, et chaque datagramme de protocole Internet comportant une pluralité de trames du signal multimédia codé.

**12.** Appareil selon l'une quelconque des revendications 7 à 11, dans lequel la période de transmission est une trame de transmission de rafales à découpage temporel, la trame de transmission de rafales à découpage temporel comprenant une pluralité d'intervalles de temps, et des données transmises à l'intérieur d'un intervalle de temps de la période de transmission étant transmises comme partie d'une rafale à l'intérieur d'un intervalle de temps de transmission de rafales de la trame de transmission de rafales à découpage temporel.

**13.** Code de programme d'ordinateur configuré pour mettre en oeuvre les actions du procédé de l'une quelconque des revendications 1 à 6, lorsqu'il est exécuté par un processeur.

11    33    10

Micro-phone | Loud-speaker | Electronic device

14 — ADC    DAC — 32

21

15 — UI  ⟷  Processor  ⟷  RX/TX — 13

Display — 34

22 — Memory

23 — Program code

24 — Encoded data

## FIG. 1

104

110 → 102 Transmitter → 112 → Communication network → 114 → 106 Receiver → 116

## FIG. 2

FIG. 3

FIG. 4

FIG. 5

FIG. 6

Receive multimedia
signal/broadcast stream ⟶701

Encode multimedia
signal/broadcast stream ⟶703

Encapsulate multimedia
stream as IP datagrams ⟶705

Convert IP datagrams into
MPE-FEC frame and form
timesliced bursts ⟶707

Multiplex timesliced
bursts with other transport
stream packets ⟶709

# FIG. 7

FIG. 8

```
                    ┌─────────────────────────────┐  ┌─901
                    │   Receive IP datagram stream │
                    └─────────────────────────────┘
                                  │
                                  ▼
                    ┌─────────────────────────────┐  ┌─903
                    │  Form ADT with bytes from    │
                    │  associated IP datagram stream│
                    └─────────────────────────────┘
                                  │
                                  ▼
                    ┌─────────────────────────────┐  ┌─905
                    │ Divide each ADT into a plurality of │
                    │  subsets and calculate for each     │
                    │   subset FEC parity codes           │
                    │   (SUBFEC) to produce a set of      │
                    │  parity codes for each ADT (FEC)    │
                    └─────────────────────────────┘
                                  │
                                  ▼
                    ┌─────────────────────────────┐  ┌─907
                    │  Distribute each subset of FEC │
                    │   parity codes (SUBFEC) to a   │
                    │     broadcast streams ADT      │
                    └─────────────────────────────┘
                                  │
                                  ▼
                    ┌─────────────────────────────┐  ┌─909
                    │   Form timesliced burst from   │
                    │  the SUB-FEC frame in the form │
                    │       of TS_packets            │
                    └─────────────────────────────┘
                                  │
                                  ▼
```

# FIG. 9

FIG. 10

$ADT_k$ → ADT divider (1001) → $SUBADT_k^1$ ⋮ $SUBADT_k^m$ → FEC generator (1003) → $SUBFEC_1$ ⋮ $SUBFEC_m$ } $FEC_k$

803

Receive ADT from
MPE formatter ~1101

Divide ADT into a
plurality of subsets ~1103

Calculate FEC
parity codes for
each ADT subset ~1105

# FIG. 11

1231

ADT$_1$ ~1202

SUBFEC$_1^1$ ~1201

SUBFEC$_2^3$ ~1203

SUBFEC$_3^2$ ~1204

S$_1$

1232

ADT$_2$ ~1212

SUBFEC$_2^1$ ~1211

SUBFEC$_1^2$ ~1213

SUBFEC$_3^3$ ~1214

S$_2$

1233

ADT$_3$ ~1222

SUBFEC$_3^1$ ~1221

SUBFEC$_2^2$ ~1223

SUBFEC$_1^3$ ~1224

S$_3$

# FIG. 12

EP 2 454 838 B1

FIG. 13

1402          1404          1406          1408

1401

| Signal receiver | → | TS filter | → | MPE decoder | → | Multimedia decoder | → |

1403

## FIG. 14

Receive scheduled time sliced burst — 1501

Filter TS packets contained within the TS burst — 1503

FEC decode data within TS burst — 1505

1509 — Schedule the receiver to receive a further burst in the TS burst frame

Determine if burst is received in error — 1507

Y

N

De-encapsulate IP datagram to obtain source encoded multimedia data — 1511

Decode some encoded multimedia data — 1513

## FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20080130602 A